# EUROPEAN PATENT SPECIFICATION

(11) **EP 3 360 274 B1**
(45) Date of publication and mention of the grant of the patent: **19.02.2020**
(21) Application number: 15787678.0
(22) Date of filing: 07.10.2015
(51) Int. Cl.: H04L 5/00, H04L 29/06

(54) **SERVICE AWARE CARRIER AGGREGATION**
DIENSTBEWUSSTE TRÄGERAGGREGATION
AGRÉGATION DE PORTEUSES EN FONCTION D'UN SERVICE

(43) Date of publication of application: 15.08.2018
(73) Proprietor: Telefonaktiebolaget LM Ericsson (publ), 164 83 Stockholm (SE)
(72) Inventor: PAREDES CABRERA, Ricardo, Ottawa, Ontario K2M 2H3 (CA); LIU, Jianning, Ottawa, Ontario K2T 0E3 (CA); SUNDARAM, Vijayashree, Ottawa, Ontario K2J 0H1 (CA)
(74) Representative: Ericsson
(86) International application number: PCT/IB2015/057673
(87) International publication number: WO 2017/060756

(56) References cited:
- WO-A1-2015/002579
- GB-A- 2 522 043
- NOKIA CORPORATION ET AL: "Comparison of CC Management Strategies", 3GPP DRAFT; R2-103513 COMPARISON OF CC MANAGEMENT POLICIES, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Stockholm, Sweden; 20100628 - 20100702, 22 June 2010 (2010-06-22), XP050605215, [retrieved on 2010-06-22]
- ERICSSON: "SAE Bearer Management Procedures on S1", 3GPP DRAFT; R3-070638, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. St. Julian, Malta; 20070322, 22 March 2007 (2007-03-22), XP050161538, [retrieved on 2007-03-22]

## Description

### TECHNICAL FIELD

Wireless communications, and in particular, a method and system for carrier activation and deactivation on a per-service basis.

### BACKGROUND

In a wireless communication system, such as a long term evolution (LTE) communication system, services are provided to a subscriber on radio bearers. Radio bearers are channels that carry audio, video, data, and/or control signaling between a network node, such as a mobile management entity (MME), and a base station or between a base station and a wireless device (WD) of a subscriber. At least two bearers are required for a bidirectional connection, one for uplink and one for downlink. For example, voice packets of a voice-only service between a landline caller and a wireless subscriber are carried by an uplink bearer carrying voice packets and overhead from the wireless device of the wireless subscriber to the base station and a downlink bearer carrying voice packets and overhead from the base station to the wireless subscriber. Also, a transport bearer carries voice and overhead from the base station to a network node that is connected to the public switched telephone network (PSTN) or backhaul network and another transport bearer carries voice and overhead from the network node to the base station. Some services require more than two bearers.

In contrast, a service such as Voice over Internet Protocol or Voice over LTE (VoIP, VoLTE) requires an additional bidirectional connection for control packets. In the case of VoLTE, 4 bearers are required at the air interface (and another 4 transport bearers at the backhaul side) if the signaling is to be separated from the voice packets.

For such services, a first downlink (DL) bearer carries voice from the serving base station to the wireless device and a second downlink bearer carries signaling from the serving base station to the wireless device. Similarly, a first uplink bearer carries voice on the uplink (UL) from the wireless device to the serving base station and a second uplink bearer carries signaling from the wireless device to the serving base station. Further, four transport bearers carry voice and signaling between the base station and the network node.

The base station and network nodes currently use the bearer as the level of granularity to manage connections. This means that if a bearer associated with a service fails, the remaining bearers associated with the service continue to be reserved for the service, thereby unnecessarily tying up resources. Further, quality of service (QoS) bandwidth and bit rates are specified for each bearer independently, without regard to the particular needs of the service as a whole. Admission control is also performed at the bearer level. Thus, for example, one bearer of a service may be admitted while others are not, thereby preventing the service from being established correctly.

Carrier aggregation is used to boost throughput per wireless device by adding secondary cells so the physical resource blocks (PRBs) of the secondary cell are available for transmission for that wireless device. Many secondary carriers can be aggregated to achieve large wireless device throughput. The decision as to when to aggregate carriers, i.e., to add secondary component carriers to a primary carrier, is currently made based on data in a buffer, channel conditions, wireless device category, overlapping carriers, etc., without regard to services as a whole. The terms secondary carrier, secondary component carrier, secondary cell, and S-Cell are all used interchangeably herein.

Prior art is known from WO 2015/002579 A1. The document discloses a method and a network node for scheduling of resources to radio bearers associated with wireless devices served by a base station in a cell. The network node and the base station operate in a wireless communications system applying carrier aggregation. A first group of one or more of the wireless devices is served in the cell as primary serving cell and a second group of other one or more of the wireless devices is served in the cell as a secondary serving cell.

The document GB 2 522 043 A discloses a user equipment in a wireless communication network detecting change in an associated bearer configuration for a multicast user service delivered via at least one bearer and transmitting message to a base station identifying the multicast user service generated in accordance with the associated bearer configuration.

Further prior art is known from Nokia Corporation et al: "Comparison of CC Management Strategies", 3GPP DRAFT; R2-103513 Comparison of CC management policies, 3rd generation partnership project (3GPP), mobile competence centre; 650, route des lucioles; F-06921 Sophia-Antipolis Cedex; France. The document discloses consideration on how to utilise the currently defined events to enable efficient CC management.

Further prior art is known from Ericsson: "SAE Bearer Management Procedures on S1'', 3GPP draft; R3-070638, 3rd generation partnership project (3GPP), mobile competence centre; 650, route des lucioles; F-06921 Sophia-Antipolis Cedex; France. The document discusses the different use cases of the initial context setup and the dedicated procedure to be used for bearer setup.

### SUMMARY

Embodiments described herein advantageously provide a method and system for carrier activation and deactivation on a per-service basis. According to one aspect, a method is provided for configuring secondary component carriers associated with a service for a wireless device, the service being associated with a plurality of bearers. The method includes receiving a message corresponding to the service. When the message is for establishing the service, then a current number of secondary component carriers of the wireless device that are activated for a current service combination established for the wireless device is determined. The method also includes determining an updated number of secondary component carriers for an updated combination of services for the wireless device, the updated combination including the service and the current service combination. The method also includes determining a number of additional secondary component carriers to activate for the updated service combination based on the updated number and current number of secondary component carriers. The method also includes determining a maximum number of allowed secondary component carriers for the wireless device. When the updated number of secondary component carriers is greater than the current number of secondary component carriers but does not exceed the maximum number of allowed secondary component carriers of the wireless device, the number of determined additional secondary component carriers are activated.

According to this aspect, in some embodiments, determining an updated number of secondary component carriers comprises calculating the updated number as the current number of secondary component carriers plus a predetermined number of secondary component carriers for the service. In some embodiments, determining an updated number of secondary component carriers comprises calculating the updated number as the maximum of the current number of secondary component carriers and a predetermined number of secondary component carriers for the service. In some embodiments, the activating comprises, for each of the additional secondary component carriers, activating secondary component carriers for the wireless device after deactivating secondary component carriers for another wireless device. In some embodiments, at least one of the number of additional secondary component carriers activated for the wireless device is for a service with a higher carrier aggregation priority than a carrier aggregation priority of a service for the other wireless device for which the at least one of the number of additional secondary component carriers was deactivated. In some embodiments, the method further includes, when the message is for releasing the service, then: determining a second updated number of secondary component carriers for a second updated combination of services for the wireless device, the second updated service combination excluding the service to be released; and deactivating a number of secondary component carriers for the wireless device equal to a difference between the current number and the second updated when the difference is greater than zero. In some embodiments, when a secondary component carrier usage exceeds a secondary component carrier usage threshold, then the method includes selecting a second wireless device having a second service having a lower carrier aggregation priority than services of the wireless device, removing the second service from a calculation of the number of carriers for the second wireless device, recalculating the number of carriers for the second wireless device, and if the recalculated number of carriers is less than a current number of carriers for the second wireless device, then deactivating at least one second component carrier of the second wireless device. In some embodiments, the received message includes the maximum number of allowed secondary component carriers for the wireless device and a carrier aggregation priority for the service.

According to another aspect, a base station is provided for configuring secondary component carriers associated with a service for a wireless device, the service being associated with a plurality of bearers. The base station includes processing circuitry including a memory and a processor. The memory is configured to store a current number of secondary component carriers of the wireless device that are activated for a current service combination established for the wireless device; an updated number of secondary component carriers for an updated combination of services for the wireless device, the updated combination including the service and the current service combination; a number of additional secondary component carriers to activate for the updated service combination based on the updated number and current number of secondary component carriers; and a maximum number of allowed secondary component carriers for the wireless device. The processor is configured to: receive a message corresponding to the service and, when the message is for establishing the service, then when the updated number of secondary component carriers is greater than the current number of secondary component carriers but does not exceed the maximum number of allowed secondary component carriers of the wireless device, activating the number of determined additional secondary component carriers.

According to this aspect, in some embodiments, determining an updated number of secondary component carriers comprises calculating the updated number as the current number of secondary component carriers plus a predetermined number of secondary component carriers for the service. In some embodiments, determining an updated number of secondary component carriers comprises calculating the updated number as the maximum of the current number of secondary component carriers and a predetermined number of secondary component carriers for the service. In some embodiments, the activating comprises, for each of the additional secondary component carriers, activating secondary component carriers for the wireless device after deactivating secondary component carriers for another wireless device. In some embodiments, at least one of the number of additional secondary component carriers activated for the wireless device is for a service with a higher carrier aggregation priority than a carrier aggregation priority of a service for the other wireless device for which the at least one of the number of additional secondary component carriers was deactivated. In some embodiments, the processor is further configured to, when the message is for releasing the service, then determine a second updated number of secondary component carriers for a second updated combination of services for the wireless device, the second updated service combination excluding the service to be released, and deactivate a number of secondary component carriers for the wireless device equal to a difference between the current number and the second updated number when the difference is greater than zero. In some embodiments, when a secondary component carrier usage exceeds a secondary component carrier usage threshold, then the processor is configured to select a second wireless device having a second service having a lower carrier aggregation priority than the services of the wireless device, removing the second service from a calculation of a number of carriers for the second wireless device, recalculating the number of carriers for the second wireless device, and if the recalculated number of carriers is less than a number of carriers before removal, then deactivate at least one second component carrier of the second wireless device. In some embodiments, the received message includes the maximum number of allowed secondary component carriers for the wireless device and a carrier aggregation priority for the service.

According to yet another aspect, a base station is provided for configuring secondary component carriers associated with a service for a wireless device, the service being comprised of a plurality of bearers. The base station includes a component carrier determination module configured to determine a current number of secondary component carriers of the wireless device that are activated for a current service combination established for the wireless device, an updated number of secondary component carriers for an updated combination of services for the wireless device, the updated combination including the service and the current service combination; a number of additional secondary component carriers to activate for the updated service combination based on the updated number and current number of secondary component carriers, and a maximum number of allowed secondary component carriers for the wireless device. The base station also includes a service admission module configured to activate the number of determined additional secondary component carriers when the updated number of secondary component carriers is greater than the current number of secondary component carriers but does not exceed the maximum number of allowed secondary component carriers of the wireless device.

According to this aspect, in some embodiments, determining an updated number of secondary component carriers comprises calculating the updated number as the current number of secondary component carriers plus a predetermined number of secondary component carriers for the service. In some embodiments, determining an updated number of secondary component carriers comprises calculating the updated number as the maximum of the current number of secondary component carriers and a predetermined number of secondary component carriers for the service. In some embodiments, the activating comprises, for each of the additional secondary component carriers, activating secondary component carriers for the wireless device after deactivating secondary component carriers for another wireless device. In some embodiments, at least one of the number of additional secondary component carriers activated for the wireless device is for a service with a higher wireless device carrier aggregation priority than the wireless device carrier aggregation priority for the other wireless device for which the at least one of the number of additional secondary component carriers was deactivated. In some embodiments, the component carrier determination module is further configured to, when the message is for releasing the service, then determine a second updated number of secondary component carriers for a second updated combination of services for the wireless device, the second updated service combination excluding the service to be released, and the base station further includes a service release module configured to deactivate a number of secondary component carriers for the wireless device equal to a difference between the current number and the second updated number when the difference is greater than zero. In some embodiments, when a secondary component carrier usage by the base station exceeds a secondary component carrier usage threshold, then the base station is configured to select another wireless device having a service having a lower carrier aggregation priority than services of the wireless device, and deactivate second component carriers of the other wireless device.

### BRIEF DESCRIPTION OF THE DRAWINGS

A more complete understanding of the present embodiments, and the attendant advantages and features thereof, will be more readily understood by reference to the following detailed description when considered in conjunction with the accompanying drawings wherein:
FIG. 1 is a block diagram of a portion of a wireless communication network constructed in accordance with principles described herein;
FIG. 2 is a block diagram of one embodiment of a base station constructed in accordance with principles described herein;
FIG. 3 is a block diagram of another embodiment of a base station constructed in accordance with principles described herein;
FIG. 4 is a block diagram of one embodiment of a network node constructed in accordance with principles described herein;
FIG. 5 is a block diagram of a home subscriber service (HSS) database constructed in accordance with principles described herein;
FIG. 6 is a flowchart of an exemplary process for configuring bearers associated with a service;
FIG. 7 is flowchart of another exemplary process for configuring bearers associated with a service;
FIG. 8 is a flowchart of an exemplary process for admitting a service and activating carriers;
FIG. 9 is a flowchart of an exemplary process for deactivation of carriers for a service when there is congestion;
FIG. 10 is a flowchart of an exemplary process for activating and deactivating carriers; and
Fig. 11 is a flowchart of an exemplary process for performing carrier activation and deactivation.

### DETAILED DESCRIPTION

Before describing in detail exemplary embodiments, it is noted that the embodiments reside primarily in combinations of apparatus components and processing steps related to carrier activation and deactivation on a per-service basis. Accordingly, the system and method components have been represented where appropriate by conventional symbols in the drawings, showing only those specific details that are pertinent to understanding the embodiments so as not to obscure the disclosure with details that will be readily apparent to those of ordinary skill in the art having the benefit of the description herein.

As used herein, relational terms, such as "first" and "second," "top" and "bottom," and the like, may be used solely to distinguish one entity or element from another entity or element without necessarily requiring or implying any physical or logical relationship or order between such entities or elements.

Embodiments described herein provide for activation and deactivation of secondary component carriers on a per-service basis. Herein, a service is defined as a set of bearers selected to carry traffic for different purposes within the service. For example, a video service "A" can be defined as a set of six radio bearers: a video uplink radio bearer, a video downlink radio bearer, a sound uplink radio bearer, a sound downlink radio bearer, a control uplink radio bearer, and a control downlink radio bearer. In some embodiments, secondary component carriers are added to a wireless device only if a service being activated, modified or released requires or benefits from the added secondary component carriers. When a service is to be commenced, a number of carriers that are needed to provide the service may be determined and activated. When a service is to be released, the number of carriers used to provide the service may be determined and deactivated. Each cell of a base station has a limit on a number of services and/or wireless devices that can make use of the component carriers of the cell. In some embodiments, when a number of available carriers is limited or a number of utilized secondary component carriers exceeds a threshold, secondary component carriers may be removed by releasing a service associated with the removed secondary component carriers. Services and wireless devices may be prioritized to determine which services are to be released and for which wireless devices a service is to be released. Also, a wireless device may have a limit to the number of secondary carriers it can use at one time, so that a service may not be added if the number of secondary component carriers associated with the service exceed the number of secondary component carriers available for the wireless device.

As noted, services have different requirements for throughput. Services can also have asymmetric throughput requirements for uplink (UL) and downlink (DL). Some services, such as IP multi-media subsystem (IMS) video, will have greater throughput requirements than other services, such as VoLTE. Also, some services may have a higher priority than other services. For example, IMS video may be prioritized over a video over best effort service.

Some embodiments described herein provide for configuring a plurality of bearers associated with a service that is identified by a service identifier. In some embodiments, the service identifier is sent from a network node, such as an MME, to a base station, such as a long term evolution (LTE) eNode B (eNB). The base station looks up the received service identifier from a table stored at the base station. The service identifier is associated in the table with a set of configuration parameters for the plurality of bearers associated with the service. Some or all of these bearers may be bidirectional, being implemented in both the uplink and the downlink. In some embodiments, the MME sends one or more quality of service class identifiers (QCIs) to the base station, and the base station correlates the QCIs to a service identifier which is associated with a set of configuration parameters for the plurality of bearers associated with the service.

The plurality of bearers are configured according to the configuration parameters associated with the service identifier. In this way, features such as quality of service (QoS), bandwidth, codec and bit rate are assigned to each bearer associated with a service, rather than assigning these features to a bearer without cognizance of the service to which the bearer belongs. Further, admission decisions are collectively made for the group of bearers associated with the service, rather than making uncorrelated admission decisions for each bearer individually without regard to service association. These admission decisions may be in addition to, part of, or as an alternative to the bearer configuration herein described and include establishing, modifying or releasing one or more of the bearers associated with the service.

In some embodiments, the service configuration parameters are stored in the base station, as noted. However, in some embodiments, at least some of the service configuration parameters are stored in a network node that is in communication with the base station. For example, a Home Subscriber Service (HSS) database may store service identifiers and configuration parameters for each of a plurality of bearers associated with the service. This data is sent to the MME, which forwards the data to the base station in response to a request to provide a particular service to a wireless device (WD). The data from the MME includes QCIs and may include the service identifier and the base station uses the QCIs alone or QCIs and the service identifier to configure additional parameters of bearers of the service. As discussed below, service configuration parameters may include a number of carriers currently activated for a wireless device for a current combination of services, a total number of carriers allowed for the wireless device, and a number of activated carriers for the wireless device when carriers associated with a service are activated.

In some embodiments, the QCIs alone or the QCIs and the service identifier are transmitted from the network node to the base station in a radio access bearer (RAB) message. RAB messages, such as E-RAB setup request and E-RAB modify request, carry information used to configure the radio bearer specified in the message. Thus, in some embodiments, the service identifier is included in the RAB messages for each bearer associated with the identified service.

In other embodiments, the QCIs alone or the QCIs and the service identifier is sent with an initial context setup message. In some embodiments, more generally, the QCIs alone or the QCIs and the service identifier are sent as an S1AP message on the S1 interface between the MME and the base station. Also, a handover request containing at least the service identifier, and possibly some configuration parameters as well, may be sent from a source base station to a target base station on an X2 interface as an X2AP message, to facilitate the process of handing off the wireless device from the source base station to the target base station.

In some embodiments, the QCIs alone or the QCIs and the service identifier are included in a message from a serving gateway to the MME on an S11 interface, from a packet data network (PDN) gateway to the serving gateway on an S5 or S8 interface, and from a policy control and charging rules function (PCRF) to the PDN gateway on a Gx interface.

In some embodiments, the message carrying the service identifier also includes rate information, such as codec bit rates, including codec maximum and minimum bit rates for one or more bearers. In other embodiments, the codec bit rates for each bearer associated with a service are stored in the base station and are identified with the service identifier at the base station. The service configuration parameters associated with a service identifier may include - for at least some of the bearers associated with the service -a codec identifier, one or more codec bit rates (including maximum and minimum codec bit rates) associated with the identified codec, a resolution and frame rate. The message carrying the service identifier may also include a maximum number of allowed carriers needed or desired for the uplink and downlink between the base station and a wireless device. The message carrying the service identifier may also include a priority of the service.

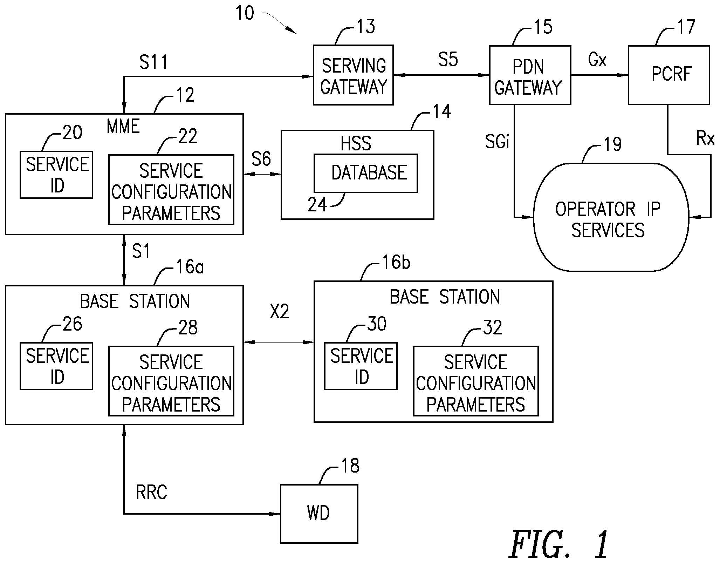

Referring now to the drawing figures, in which like reference numerals refer to like elements, there is shown in FIG. 1 a block diagram of one embodiment of a portion of a wireless communication system 10. The wireless communication system 10 includes an MME 12, a serving gateway 13, an HSS 14, a packet data network (PDN) gateway 15, a plurality of base stations 16a and 16b, referred to collectively as base stations 16, a policy control and charging rules function (PCRF) 17, at least one wireless device 18 and an operator's IP services 19. The operator services 19 define the various services to be provided to a subscriber, and may be an Internet Protocol Multimedia Subsystem (IMS) network. In some embodiments, the IMS network may include the PCRF 17.

The MME 12 stores one or more QCIs and/or service identifiers 20, and may also store service configuration parameters 22. In some embodiments, the QCIs and/or service identifiers 20 and service configuration parameters 22 of the MME 12 are obtained from a database 24 of the HSS 14. In some embodiments, some service configuration parameters may arrive at the MME 12 from the serving gateway 13. In some embodiments, the MME 12 only stores QCIs and/or service identifiers 20 and all service configuration parameters are stored at the base station 16.

Thus, the base stations 16 also store QCIs and service identifiers and service configuration parameters. The QCIs/service identifiers 26, 30 and service configuration parameters 28, 32 stored at the base stations 16 may be obtained from the MME 12 at a time of setup, modification, or deletion of a service, or may be pre-stored. The MME 12 communicates with the base station 16a over an S1 interface and communicates with the HSS 14 over an S6 interface. The base station 16a communicates with the wireless device 18 over the air interface and communicates with other base stations 16b over an interface, such as the X2 interface. Note that although the configuration of FIG. 1 is an LTE network, the inventive concepts and principles discussed herein apply to other wireless communication systems such as, for example, a Worldwide Interoperability for Microwave Access (WIMAX) network, a Universal Mobile Telecommunications System (UMTS) network or any other network or system where connections, calls, or bearers (bidirectional or otherwise) required for a service are not conventionally managed collectively, i.e., are conventionally managed individually.

In some modes of operation, service creation is triggered in one of several ways. For example, creation of a service with associated bearers may occur when the wireless device 18 attaches to the network by, for example, initiating a call. During authentication of the wireless device 18, the MME 12 retrieves the subscriber profile from the database 24 of the HSS 14 via the S6 interface to authenticate the subscriber and determine if the subscriber is subscribed to the requested service.

Thus, when a subscriber attaches to the network, the subscriber at the wireless device 18 may request a particular service that requires a plurality of bearers to carry the data and signaling required to establish and maintain the service. This request may be communicated to the MME 12 via the base station 16a. The MME 12 obtains one or more QCIs alone or QCIs and a service identifier 20 for the requested service. The QCIs and/or service identifier may be pre-stored at the MME 12, obtained from the HSS 14 or from the serving gateway 13. The MME 12 sends the QCIs alone or the QCIs and the service identifier to the base station 16a.

The QCIs alone or the QCIs and the service identifier (hereafter, QCIs/service identifier) may be communicated to the base station 16a via an E-RAB setup message or an E-RAB modify message. For example, the QCIs/service identifier may be included in the E-RAB level QoS parameters information element of the E-RAB setup message for the E-RAB to be setup. Similarly, the QCIs/service identifier may be included in the E-RAB level QoS parameters information element of the E-RAB modify message for the E-RAB to be modified. When the RAB messages are used to communicate the QCIs/service identifier, optional parameters may also be included. These optional parameters are specific to the particular service and may, for example, include codec information. As an alternative to using RAB messages to communicate the QCIs/service identifier, the QCIs/service identifier may be sent in an S1AP message. For this purpose, two new S1AP messages may be introduced: E-Service Setup and E-Service Modify. Each of these messages include service configuration parameters for a plurality of bearers associated with the service. Thus, in one embodiment, an RAB is sent for each bearer associated with a service, and in another embodiment, a single message includes service configuration parameters for all of the bearers supporting the service. These service configuration parameters may indicate a number of bearers associated with the service, as well as a priority of the service.

In some modes of operation, the wireless device 18 may already be attached to the network and may request, modify or terminate a service. If the service is Internet protocol multimedia subsystem (IMS)-based, an IMS node (which may include the PCRF 17) may trigger service creation or modification. As is known by those of ordinary skill in the art, the IMS is a network that supports service management such as support for creation, deletion and modification of a service.

When a service is created, the policy control and charging rules function (PCRF) 17 transmits QCIs/service identifier on the Gx interface to the packet data network (PDN) gateway 15. The PDN gateway 15 forwards the QCIs/service identifier to the serving gateway 13 on the S5 interface. The serving gateway 13 forwards the QCIs/service identifier to the MME 12 via the S11 interface. The MME 12 then forwards the QCIs/service identifier to the base station 16a on the S1 interface. In addition to the service identifier, service configuration parameters are also transmitted from the PCRF 17 to the base station 16a via of the PDN gateway 15 and the serving gateway 13.

In some modes of operation, a deep packet inspection (DPI) node can be used to monitor traffic for a wireless device 18. When the DPI node sees a new service requested, e.g., a session initiation protocol (SIP) INVITE message to start a VoIP session, the DPI node creates the request and signals the request to the MME. The DPI node may use the same messages as IMS nodes. The DPI node may be a logical node collocated with the PDN gateway 15 or be a physical node between the PDN gateway 15 and the Internet. The DPI node intercepts packets from or to the PDN gateway 15 to determine if a new service is being initiated. For example, when the DPI node detects that a new session, such as VoIP, is being initiated, the DPI node triggers creation of the bearers for the call by signaling the information contained in Table 1 to the MME 12.

As noted, in some embodiments, a service identifier is sent from the MME 12 to the base station 16, which correlates the service identifier to service configuration parameters. Table 1 shows the contents of an exemplary QoS message or information element (IE) used to convey the service identifier from one of the PCRF 17, PDN gateway 15, the serving gateway 13 or the MME, ultimately destined for the base station 16. A QCI is contained in Octet 6 and is omitted in some embodiments. Octets 27-28 include the service identifier and octets 29-44 contain service configuration parameters for the bearer. Octets 33-36 contain the resolution of a service if applicable, octets 37-40 contain the frame rate of a service if applicable and octets 41-56 contain the bit rate parameters for the bearer. Note that the term service identifier and service profile identifier are used interchangeably herein. Note that in some embodiments, the service identifier is sent without any service configuration parameters. In these embodiments, the base station relies on a table stored at the base station that correlates the service identifier with the service configuration parameters sufficient to configure all the bearers in support of the service.

**TABLE 1**

| | **Bits** | | | | | | | | |
|---|---|---|---|---|---|---|---|---|---|
| **Octets** | **8** | **7** | **6** | **5** | **4** | **3** | **2** | **1** | |
| 1 | Type = 80 (decimal) | | | | | | | | |
| 2-3 | Length = n | | | | | | | | |
| 4 | Spare | | | | Instance | | | | |
| 5 | Spare | PCI | PL | | | | Spare | PVI | |
| 6 | Label (QCI) | | | | | | | | |
| 7-11 | Maximum bit rate for uplink | | | | | | | | |
| 12-16 | Maximum bit rate for downlink | | | | | | | | |
| 17-21 | Guaranteed bit rate for uplink | | | | | | | | |
| 22-26 | Guaranteed bit rate for downlink | | | | | | | | |
| 27-28 | Service Profile Identifier | | | | | | | | |
| 29-30 | Codec Identifier for uplink | | | | | | | | |
| 31-32 | Codec Identifier for downlink | | | | | | | | |
| 33-34 | Resolution for uplink | | | | | | | | |
| 35-36 | Resolution for downlink | | | | | | | | |
| 37-38 | FrameRate for uplink | | | | | | | | |
| 39-40 | FrameRate for downlink | | | | | | | | |
| 41-44 | Minimum bit rate for uplink | | | | | | | | |
| 45-48 | Minimum bit rate for downlink | | | | | | | | |
| 49-52 | Codec Bit Rate List for uplink | | | | | | | | |
| 53-56 | Codec Bit Rate List for downlink | | | | | | | | |
| 57 to (n+4) | These octet(s) is/are present only if explicitly specified | | | | | | | | |

The bearer QoS message of Table 1 may be included in: a create bearer request message, an update bearer request message, a create session request message, a create session response message, a forward relocation request message, a context response message, a multimedia broadcast and multicast service (MBMS) session start request message and an MBMS session update request message.

Table 2 is an alternative example of information communicated in a message that carries a service identifier from the MME 12 to the base station 16a.

**TABLE 2**

| IE/Group Name | Presence | Range | IE type and reference | Semantics description |
|---|---|---|---|---|
| Service Level Parameters | | | | |
| Service | M | | INTEGER (0..65535) | This parameter identifies the service so that nodes can expand it into or retrieve a set of service level parameters. |
| Profile | | | | |
| Identifier | | | | |
| Service level | O | | | This IE applies to non-GBR bearers only and shall be ignored otherwise. |
| AMBR | | | | |
| E-RAB IE list | M | | | This IE identifies the list of E-RAB associated to the service. |

In the examples discussed herein, the "M" indicates that the field is mandatory, whereas the "O" indicates that the field is optional. AMBR is the aggregated maximum bit rate and GBR is the guaranteed bit rate. IE refers to an information element. In this embodiment, the service identifier is sent with an indicator (E-RAB IE list) that identifies the list of radio access bearers associated with the service. When the service identifier is received by the base station 16a, the base station 16a maps the service identifier to a set of service configuration parameters that are applied to the identified bearers. These bearers are pre-associated with the service, or associated with the service at the time of configuring the bearers.

For example, the service identifier 26 may identify a VoIP service, and the service configuration parameters 28 may specify, *inter alia*, a type of codec and codec bit rates for each bearer supporting the service. For a video service, the service configuration parameters may specify a video resolution, a frame rate and codec. These service configuration parameters 28 configure the plurality of bearers associated with the service identified by the service identifier 26. Some of the service configuration parameters may apply to all bearers, i.e., to the service as a whole, while other service configuration parameters apply to a specific one of the bearers. Note also that configuration of a service may include implementing admission control, including establishing, modifying or releasing a particular one of a plurality of bearers associated with the identified service. The service configuration may also include bit rate adaptation of some or all of the bearers. Further, service configuration may include configuration at the time the service is set up or refer to service that is modified post set up.

In the case of handover of the wireless device from the base station 16a to the base station 16b, at least a service level identifier 26 is sent from the base station 16a to the base station 16b on the X2 interface. The service level identifier 26 may be contained in an E-RAB Level QoS parameter information element. Upon receiving the service level identifier, the base station 16b retrieves corresponding service configuration parameters 32 to configure the bearers associated with the service identifier. The service configuration parameters applied to the bearers at the target base station 16b may be received from the source base station 16a or may be stored in the base station 16b and associated with the service identifier from the source base station 16a. In some embodiments, service configuration parameters received from the source base station 16a supersede the service configuration parameters stored in the target base station 16b.

Some of the services that may be associated with a set of configuration parameters include voice over long term evolution (VoLTE) service, an Internet Protocol Multimedia Subsystem (IMS) video service, a voice over Internet (VoIP) best effort service, and a video best effort service.

In connection with the provision of these services, different types of codecs may be specified, including an adaptive multi-rate (AMR) codec, a video Motion Picture Experts Group (MPEG) codec at a specified frame rate and an audio codec.

Table 3 is another example of a message that may be sent from the MME 12 to the base station 16. The message optionally includes a service identifier which is used to retrieve the service configuration parameters stored at the base station. The message also includes a rate information field that provides bearer level information related to rates supported.

**TABLE 3**

| IE/Group Name | Presence | Range | IE type and reference | Semantics description | Criticality | Assigned Criticality |
|---|---|---|---|---|---|---|
| QCI | M | | INTEGER (0..255) | QoS Class Identifier defined in TS 23.401. Logical range and coding specified in TS 23.203. | - | - |
| Allocation and Retention Priority | M | | 3GPP TS 36.413 9.2.31 | | - | - |
| GBR QoS Information | O | | 3GPP TS 36.413 9.2.10 | This IE applies to GBR bearers only and shall be ignored otherwise. | - | - |
| Service Identifier | O | | INTEGER (0..65535) New | This identifier is used to retrieve the service specific configuration in the eNB. | - | - |
| Rate Information | O | | New | This IE provides bearer level information related to rates supported. | - | - |

Table 4 shows rate information that may be identified by the rate information field of the message of Table 3.

**TABLE 4**

| IE/Group Name | Presence | Range | IE type and reference | Semantics description |
|---|---|---|---|---|
| e-RAB-CodecDL | M | | New | Downlink supported codec and bit rate list |
| e-RAB-ResolutionDL | O | | New | Resolution that downlink bearer will use. |
| e-RAB-MinimumBitrateDL | O | | BitRate New | Downlink initial/preferred bit rate in kbps (remote to local). Note that the GBR parameter can be used as target bit rate when this parameter is omitted. |
| e-RAB-MaximumB itrateDL | O | | BitRate New | Downlink initial/preferred bit rate in kbps (remote to local). Note that the GBR parameter can be used as target bit rate when this parameter is omitted. |
| e-RAB-FrameRateDL | O | | New | The frames per second transmitted in the downlink direction. |
| e-RAB-CodecUL | M | | New | Uplink supported codec and bit rate list |
| e-RAB-ResolutionUL | O | | New | Resolution that uplink bearer will use. |
| e-RAB-MinimumB itrateUL | O | | BitRate New | Uplink initial/preferred bit rate in kbps (remote to local). |
| e-RAB-MaximumBitrateUL | O | | BitRate New | Uplink initial/preferred bit rate in kbps (remote to local). |
| e-RAB-FrameRateUL | O | | New | The frames per second transmitted in the uplink direction. |

Numerical references such as 9.2.31 refer to passages in the 3GPP communication standard TS 36.413.

Table 4 specifies a supported codec identifier, and bearer resolutions, frame rate and bit rates, for an uplink bearer and a downlink bearer associated with the service identified by the service identifier of Tables 1, 2 or 3. In some embodiments, these parameters are transferred from the MME 12 to the base station 16a. In other embodiments, these parameters are pre-stored in the base station 16 and associated with a service profile.

In one embodiment, the service profile or service identifier is an unsigned 32 bit field which indicates the service to which the specific information refers. More specifically, the service identifier identifies the service to which a plurality of bearers belong, and is used by the base station to retrieve the service configuration parameters for configuring the associated bearers. In one embodiment, the service identifier originates at the PCRF 17 and is transmitted to the PDN 15 via the Gx interface. In one embodiment, the PDN 15 forwards the service identifier to the serving gateway 13 via the S5 interface. In one embodiment, the serving gateway 13 forwards the service identifier to the MME 12 via the S11 interface.

The service identifier groups one or more bearers into an application level service such as VoLTE or video service. The service configuration parameters may include the parameters indicated in Table 4, and may include additional parameters. For example, service configuration parameters may include bit rate information which is of the type "Grouped". Each type contains the bit rate associated with one direction of one service bearer within one application level service. Thus, the service configuration parameters may include a bitrate information-UL message that specifies a codec, a codec bitrate list, a resolution, a code frame rate, a codec minimum bit rate and a codec maximum bit rate, all for an uplink bearer. Similar information is provided for a downlink bearer. These parameters may be sent in the same message or in different messages.

The service configuration parameters may include a codec identifier value that applies to services that use a codec, such as, for example, adaptive multi rate (AMR), sound or video. The service configuration parameters may include a codec bit rate list that applies to services that support multiple bit rates, such as, for example, video or voice services. The bit rate list may include a type unsigned32 data value for each bit rate in the list. The service configuration parameters may include a resolution that applies to service that use a resolution, such as a video service.

The service configuration parameters may include a codec minimum bit rate that specifies the minimum bit rate to be allowed for the associated service data flow. In one embodiment, the codec minimum bit rate is of a type "unsigned32" and indicates the minimum bit rate in bits per second for a service data flow. The bandwidth contains all the overhead coming from the IP-layer and the layers above, e.g., IP, UDP, RTP and RTP payload. The service configuration parameters may also include a codec maximum bit rate that specifies the maximum bit rate to be allowed for the associated service data flow. In one embodiment, the codec maximum bit rate is of type "unsigned32", and indicates the maximum bit rate in bits per second for a service data flow. The bandwidth contains all the overhead coming from the IP-layer and the layers above, e.g., IP, UDP, RTP and RTP payload.

The service configuration parameters may also include a codec bit rate that specifies a bit rate supported by the codec. Multiple instances are required to specify multiple bit rates supported. In one embodiment, the codec bit rate is of type "unsigned32", and indicates a bit rate in bits per second for a service data flow. The bandwidth contains all the overhead coming from the IP-layer and the layers above, e.g., IP, UDP, RTP and RTP payload. The service configuration parameters may also include a maximum number of supported codec bit rates, a codec bit rate ID, and resolution ID.

Thus, in some embodiments, the base station receives a service identifier in a message that includes a rate information indicator that refers the base station 16 to a table of service configuration parameters to be implemented for each bearer so that the bearers associated with a service can be treated as a group. At least some of these service configuration parameters may be included in information elements transmitted from the MME 12 to the base station 12. Examples of these information elements are as follows:

| IE/Group Name | Presence | Range | IE Type and Reference | Semantics Description | Criticality |
|---|---|---|---|---|---|
| Codec Info Item | | *1* .. *<maxnoofCo dec-Items>* | | | EACH |
| >codecIdentifier | M | | New | | - |
| >codecBitRateL ist | M | | New | | - |

| Range bound | Explanation |
|---|---|
| maxnoofCodecItems | Maximum no. of Codec Bit Rate supported for the given Codec, the maximum value is 16. |

| IE/Group Name | Presence | Range | IE Type and Reference | Semantics Description |
|---|---|---|---|---|
| Codec Identifier | M | | ENUMERATED ( AMR, VideoMPEG-4-SPat30fps, VideoMPEG-4-ASPat30fps, Sound-H.264,) | |

| IE/Group Name | Presence | Range | IE Type and Reference | Semantics Description |
|---|---|---|---|---|
| Codec Bit Rate Info | | | | |
| >Codec Bit Rate ID | M | | New | |
| >Codec Bit Rate | M | | BitRate, New | |

| IE/Group Name | Presence | Range | IE Type and Reference | Semantics Description |
|---|---|---|---|---|
| Codec Bit Rate ID M | M | | OCTET STRING | |

| IE/Group Name | Presence | Range | IE Type and Reference | Semantics Description |
|---|---|---|---|---|
| Resolution ID M | M | | INTEGER(0..65535) | |

| IE/Group Name | Presence | Range | IE Type and Reference | Semantics Description |
|---|---|---|---|---|
| FrameRate M | M | | INTEGER(0..512) | |

In some embodiments, rather than transmit a service identifier 20 to the base station 16a, a plurality of QoS class identifiers (QCIs), each associated with a different bearer associated with the service, are sent from the MME to the base station 16a. In this case, the base station 16 can use the QCIs to determine the set of service configuration parameters 28. For example, each QCI may be sent via a different one of a plurality of RAB messages, each RAB message pertaining to a particular one of the plurality of bearers of the service. The base station 16a determines a service identifier 26 based on the received QCIs from a table stored at the base station 16a. The determined service identifier 26 identifies a requested service and is associated with a set of service configuration parameters 28. Table 5 is an example of a table stored in the base station 16 that associates the received QCIs with a service identifier. The description refers to whether the QCI is associated with a communication standard or is available for operator-specified use. The priority field is an existing field in accordance with the embodiment of Table 5. As is shown, it is contemplated that other fields can be incorporated into Table 5.

**TABLE 5**

| QCI ID | Description | Priority | ... | Service-profile-ID | ... |
|---|---|---|---|---|---|
| 1 | Standardized | Existing field | | ID in range [0..65535] | |
| ... | Standardized | Existing field | | ID in range [0..65535] | |
| 9 | Standardized | Existing field | | ID in range [0..65535] | |
| 10 | Operator's | Existing field | | ID in range [0..65535] | |
| ... | Operator's | Existing field | | ID in range [0..65535] | |
| 255 | Operator's | Existing field | | ID in range [0..65535] | |

Table 6 provides an exemplary description of services identified by the service identifier and bearer profile identifiers for each service. It is understood that service profile IDs can be associated with any manner of bearer profile IDs. In Table 6,
"Bearer correlated" indicates whether two or more bearers depend one from another, such that removing one would cause removal of the other.

**TABLE 6**

| Service profile ID | Description | Bearer Correlated | Bearer Profile ID (BPID) |
|---|---|---|---|
| 0 | Default | | |
| 1 | VoLTE-Service | No | Voice = BPID 1 |
| | | Yes | Signal = BPID 2 |
| 2 | IMS Video service | Yes, to sound | DL Video = BPID 3 |
| | | Yes, to sound | UL Video = BPID 3 |
| | | Yes, to video | DL Sound = BPID 5 |
| | | Yes, to video | UL Sound = BPID 5 |
| | | Yes, to all | Signal = BPID 6 |
| 3 | VoIP over | No | Voice = BPID 7 |
| | Best Effort | Yes | Signal = BPID 8 |
| 4 | Video over | Yes, with sound | Video = BPID 9 |
| | Best Effort | Yes, with video | Sound = BPID 10 |
| | | Yes, with all. | Signal = BPID 11 |
| ... | | | |
| 255 | | | |
| ... | | | |
| 65535 | | | |

Each bearer profile identifier may be associated with one or more codecs and bitrates to be applied to bearers associated with the service, as shown in the examples provided in Table 7.

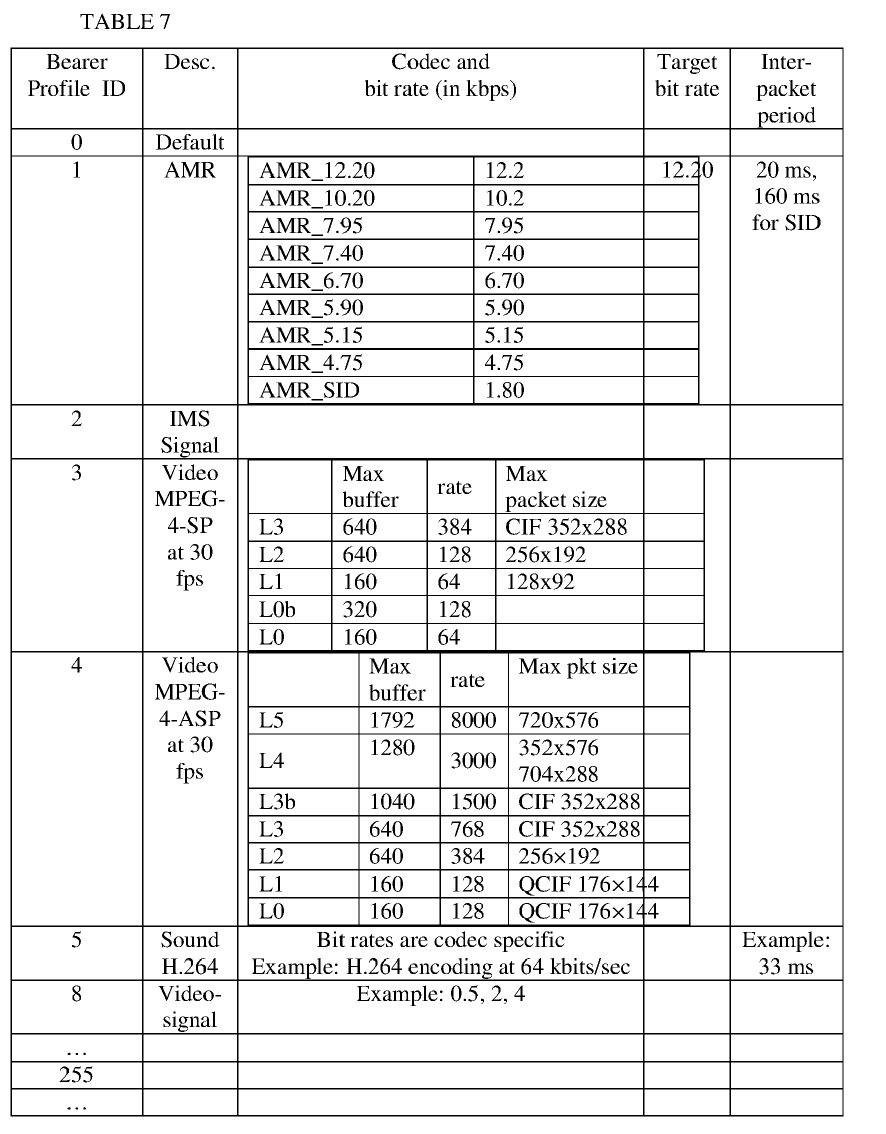

Thus, a service identifier may specify a bearer profile for each bearer associated with the service, and the bearer profile may specify a codec to be applied to the bearer.

In some embodiments, one or more QCIs are received at the base station 16 from the MME 12 via a variety of different types of messages such as RAB messages, and are correlated to determine a service identifier. Each QCI is associated with a particular bearer, or one QCI is associated with the service as a whole. When the one or more QCIs are received at the base station, the base station correlates the QCIs with a service identifier, as from Table 5. The service identifier identifies a service and is associated with a bearer profile in Table 6, which is correlated by the base station 16 with a codec and bit rates in Table 7.

Thus, in some embodiments, the service identifier, rather than the QCI, is received at the base station 16 from the MME 12 in a message such as shown in Tables 1, 2 or 3. The base station 16 correlates the received service identifier with the service configuration parameters of which some are included in Table 4. In other embodiments, at least one QCI is received at the base station 16 from the MME 12. The base station 16 correlates the received at least one QCI with a service identifier as in Table 5. The service identifier is correlated with a bearer profile in Table 6 and the bearer profile is correlated to a codec and bit rates in Table 7.

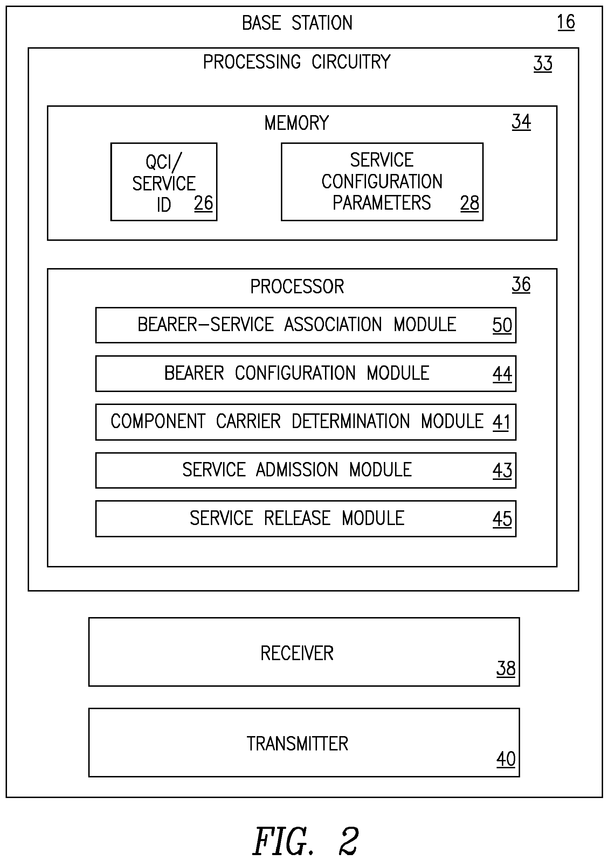

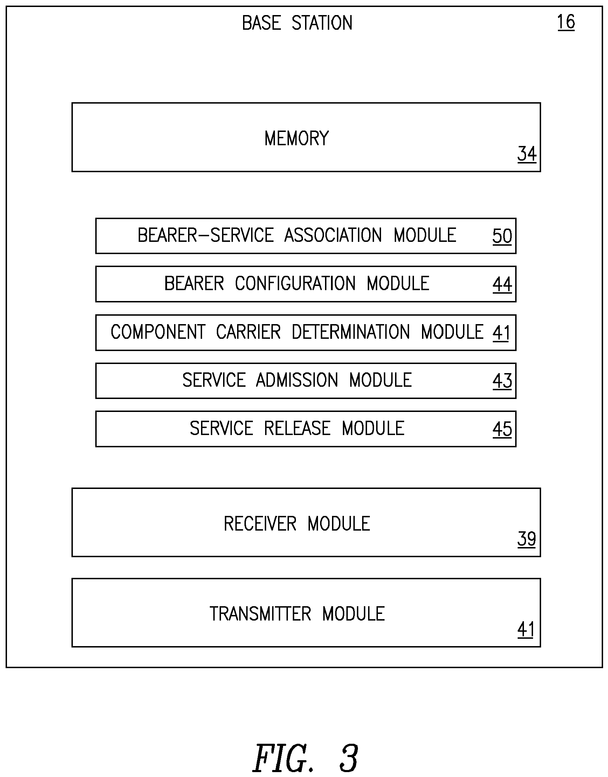

Returning now to the drawing figures, FIG. 2 is a block diagram of one embodiment of a base station 16. The base station 16 has processing circuitry 33 that includes a memory module 34, a processor 36, a receiver 38 and a transmitter 40. These elements may be implemented as application specific circuitry (ASIC) and/or field programmable gate arrays (FPGA). Alternatively, as shown in FIG. 3, the modules of the processor 36 may instead be standalone software modules that are implemented by a programmable processor. The receiver module 39 and the transmitter module 41 may be implemented in a combination of hardware and software.

Processing circuitry 33 may include and/or be connected to and/or be configured for accessing (e.g., writing to and/or reading from) memory 34, which may include any kind of volatile and/or non-volatile memory, e.g., cache and/or buffer memory and/or RAM (Random Access Memory) and/or ROM (Read-Only Memory) and/or optical memory and/or EPROM (Erasable Programmable Read-Only Memory). Such memory 34 may be configured to store code executable by control circuitry and/or other data, e.g., data pertaining to communication, e.g., configuration and/or address data of nodes, etc. Processing circuitry 33 may be configured to control any of the methods described herein and/or to cause such methods to be performed, e.g., by base station 16. Corresponding instructions may be stored in the memory 34, which may be readable and/or readably connected to the processing circuitry 33. In other words, processing circuitry 33 may include a controller, which may comprise a microprocessor and/or microcontroller and/or FPGA (Field-Programmable Gate Array) device and/or ASIC (Application Specific Integrated Circuit) device. It may be considered that processing circuitry 33 includes or may be connected or connectable to memory, which may be adapted to be accessible for reading and/or writing by the controller and/or processing circuitry 33.

In FIG. 2, the memory module 34 stores QCIs and/or service identifiers 26, and service configuration parameters 28. The processor 36 has a bearer-service association module 42 that identifies bearers associated with a service identifier received from a network node. The processor 36 also has a bearer configuration module 44 that configures the bearers associated with the identified service. In one embodiment, the processor 36 can be implemented as a microprocessor operating under the direction of software instructions, or may be an application specific integrated circuit, for example. Thus, the bearer-service association module 42 and the bearer configuration module 44 may provide functions that are implemented by a mix of hardware and software modules. The receiver 38 receives the service identifier and/or a QCI from the network node, such as the MME 12. The transmitter module 40 may transmit a service request to the network node, so that the network node can select a service identifier corresponding to the requested service.

In addition to configuring bearers for a service, the base station 16 is also configured to activate or deactivate secondary component carriers on a per-service basis. Thus, each service profile identifier may be associated with a different service and each different service may have a different number of carriers on the uplink and the downlink. Also, each service and/or wireless device 18 may have an associated priority with respect to whether carriers can be activated to support a service. For example, carrier aggregation priority is a parameter that may be used during congestion to decide which wireless devices should be considered for removing services, i.e., removing the carriers supporting services, to accommodate other services with higher carrier aggregation priorities. An example of carrier maximums and carrier aggregation priorities for various services is shown in Table 8.

**TABLE 8**

| Service profile ID | Description | Maximum Allowed Carriers for Aggregation in DL | Maximum Allowed Carriers for Aggregation in UL | Carrier Aggregation Priority (Values 1-x) |
|---|---|---|---|---|
| 0 | Default | 2C | No CA | 3 |
| 1 | VoLTE-Service | No CA | No CA | 4 |
| 2 | IMS Video service | 5C | 3C | 1 |
| 3 | VoIP over Best Effort | No CA | No CA | 4 |
| 4 | Video over Best Effort | 3C | 2C | 2 |
| ... | | | | |
| 255 | | | | |
| ... | | | | |
| 65535 | | | | |

In Table 8, "C" stands for carrier and "CA" stands for carrier aggregation. Thus, "2C" stands for two carriers, "3C" stands for three carriers, etc. As shown in Table 8, a service having the highest priority (carrier aggregation priority 1) is the IMS video service. This service has a maximum allowed number of carriers of 5 carriers on the downlink and 3 carriers on the uplink. Services having a lowest priority include VoLTE and VoIP over best effort. In another example, priorities may also be assigned to different wireless devices so that when a service is to be deactivated because of congestion, a device with a low priority may be selected for service release before a wireless device of higher priority. Note also that the data in Table 8 are examples only, and embodiments are not limited to the service profile IDs, descriptions, numbers of carriers and priority values shown in Table 8.

When a new service for a wireless device 18 is created, modified or released at the base station 16, the maximum number of carriers the wireless device 18 can have activated is recalculated based on the maximum number of carriers that the wireless device 18 supports and based on the combination of services of the wireless device that are currently active. A maximum number of carriers that the wireless device 18 supports may depend on per-service configured carrier requirements, per-service quality of service (QoS) requirements such as service aggregated maximum bit rate (AMBR) wireless device AMBR of non-guaranteed bit rate (non-GBR) services active in the wireless device 18, aggregation of GBR of all GBR services active in the wireless device, and bandwidth allowed in the cell serving the wireless device 18.

For example, when a new service is to be added, a current number of secondary component carriers of the wireless device 18 that are activated for a current service combination established for the wireless device 18 is determined. An updated number of secondary component carriers for an updated combination of services for the wireless device 18 is also determined, the updated combination including the new service and the current service combination. Determining the updated number of secondary component carriers may include calculating the updated number as the current number of secondary component carriers plus a predetermined number of secondary component carriers for the service. Determining the updated number of secondary component carriers may include calculating the updated number as the maximum of the current number of secondary component carriers and a predetermined number of secondary component carriers for the service. A number of additional secondary component carriers to activate for the updated service combination based on the updated number and current number of secondary component carriers is determined. Also, a maximum number of allowed secondary component carriers for the wireless device 18 is determined. When the updated number of secondary component carriers is greater than the current number of secondary component carriers but does not exceed the maximum number of allowed secondary component carriers of the wireless device 18, then the number of determined additional secondary component carriers are activated.

When a service is to be released, the number of secondary component carriers of the wireless device 18 is updated. If there are currently no services using multiple carriers, there is no impact. If, however, the service being removed has multiple carriers, the number of secondary component carriers is recalculated based on the remaining services in the wireless device 18. Thus, a second updated number of secondary component carriers for a second updated combination of services for the wireless device 18 is determined, where the second updated service combination excludes the service to be released. Also, a number of secondary component carriers for the wireless device 18 equal to a difference between the current number and the second updated when the difference is greater than zero is determined. When a secondary component carrier is removed from the wireless device 18, a secondary component carrier counter of the wireless device 18 is decremented. The secondary component carrier counter is used during service admission to determine a number of activated secondary component carriers of the wireless device 18.

Thus, the base station 16 can configure a number of secondary component carriers but have them deactivated until need for a service to be added. When there is a need to add a service, the base station 16 can activate the configured secondary component carriers. The number of secondary component carriers that a wireless device 18 can have may be limited by wireless device capabilities. The maximum required number of secondary component carriers that are admitted for the wireless device 18 may be determined when a service is added, modified or released. When the wireless device 18 detects that a new secondary component carrier is to be activated, either by pre-defined configuration data or by radio resource control (RRC) measurement or by monitoring a buffer of data to be transmitted to the wireless device 18, the base station 16 may inspect the maximum allowed number of secondary component carriers for the wireless device 18 and the number of secondary component carriers already activated for the wireless device 18. The new secondary component carriers will only be activated if the total number of activated secondary component carriers does not exceed the maximum allowed secondary component carriers for the wireless device 18.

Note that a carrier can serve as a primary carrier for one wireless device and as a secondary carrier for a second wireless device. The number of wireless devices that a base station can serve is constrained by system resources, e.g., bandwidth, physical downlink control channel (PDCCH) capacity, etc. A carrier aggregation (CA) capable wireless device 18 can be configured with multiple secondary component carriers and may compete with other wireless devices served by the same base station 16 for the number of carriers available at the base station 16. When the base station 16 is congested, as when a number of activated carriers exceeds a secondary component carrier usage threshold, the carriers may be allocated to existing and/or new services according to service priorities. Thus, when the base station 16 is congested, a service with a low priority may not be added to the services of a wireless device. Also, when the base station 16 is congested, a service with a low priority at a first wireless device may be released before a higher priority service for the first wireless device or another wireless device is activated.

Referring again to FIG. 2, the service configuration parameters 28 of the memory 34 may further include a current number of secondary component carriers of a wireless device that are activated for a current service combination established for the wireless device. The service configuration parameters 28 may further include an updated number of secondary component carriers for an updated combination of services for the wireless device, where the updated combination includes a new service and the current service combination. The service configuration parameters 28 may further include a number of additional secondary component carriers to activate for the updated service combination based on the updated number and current number of secondary component carriers. The service configuration parameters 28 may further include a maximum number of allowed secondary component carriers for each wireless device 18 served by the base station 16, and may further include carrier aggregation priorities for each service and/or wireless device such as those shown and described with reference to Table 8 above.

The processor 36 of the base station 16 may further include a component carrier determination module 41, a service admission module 43, and a service release module 45. The component carrier determination module 41 is configured to determine the current number of secondary component carriers of a wireless device that are activated for a current service combination established for the wireless device. The component carrier determination module 41 is further configured to determine the updated number of secondary component carriers for the updated combination of services for the wireless device, where the updated combination includes the service and the current service combination. The component carrier determination module 41 is further configured to determine the number of additional secondary component carriers to activate for the updated service combination based on the updated number and current number of secondary component carriers. The component carrier carriers to activate for the updated service combination based on the updated number and current number of secondary component carriers. The component carrier determination module 41 further determines the maximum number of allowed secondary component carriers for the wireless device.

The processor 36 may further include a service admission module 43 configured to activate carriers upon admission of a service. The service admission module 43 may activate the number of determined additional secondary component carriers when the updated number of secondary component carriers is greater than the current number of secondary component carriers but does not exceed the maximum number of allowed secondary component carriers of the wireless device.

In some embodiments, the component carrier determination module determines a second updated number of secondary component carriers for a second updated combination of services for the wireless device, the second updated service combination excluding the service to be released. Accordingly, the processor 36 may further include a service release module 45 configured to deactivate a number of secondary component carriers for the wireless device equal to a difference between the current number and the second updated number when the difference is greater than zero.

The processor 36 may operate to determine if a number of secondary carriers of the base station 16 that are active exceeds a secondary component carrier usage threshold. When the secondary component carrier usage threshold is exceeded, then the service release module 43 may be directed to deactivate a set of carriers for a wireless device 18 associated with a low priority service. Also, when a service is to be added for a wireless device 18 by the service admission module 43 and the secondary component carrier usage threshold is exceeded, a low priority service of the wireless device 18 or another wireless device may be released by the service release module 45 before the service is added.

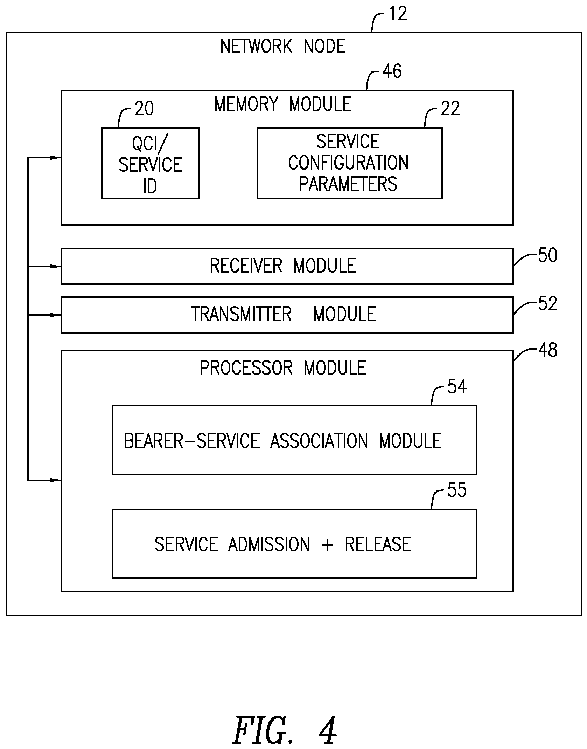

FIG. 4 is a block diagram of one embodiment of a network node 12, which may be a higher level node such as a mobile management entity. The network node 12 has a memory module 46, a processor module 48, a receiver module 50 and a transmitter module 52. As with the base station, elements 46, 48, 50 and 52 may be implemented as a memory, processor, receiver and transmitter, respectively. The embodiments, the processor module 48 has a bearer-service association module 54 that associates bearers with an identified service. In one embodiment, the processor module 48 can be implemented as a microprocessor operating under the direction of software instructions, or may be an application specific integrated circuit, for example. Thus, the bearer-service association module 54 may provide functions that are implemented by a mix of hardware and software modules. Once the bearers associated with the service are identified, the service configuration parameters 22 for each bearer may be transmitted to the base station 16 along with the service identifier and/or the QCIs associated with the bearers. The network node 12 may also include a service admission and release module 55 which functions to activate transport bearers to the backhaul network and deactivate transport bearers to the backhaul network in response to admission and release of a service at the base station 16.

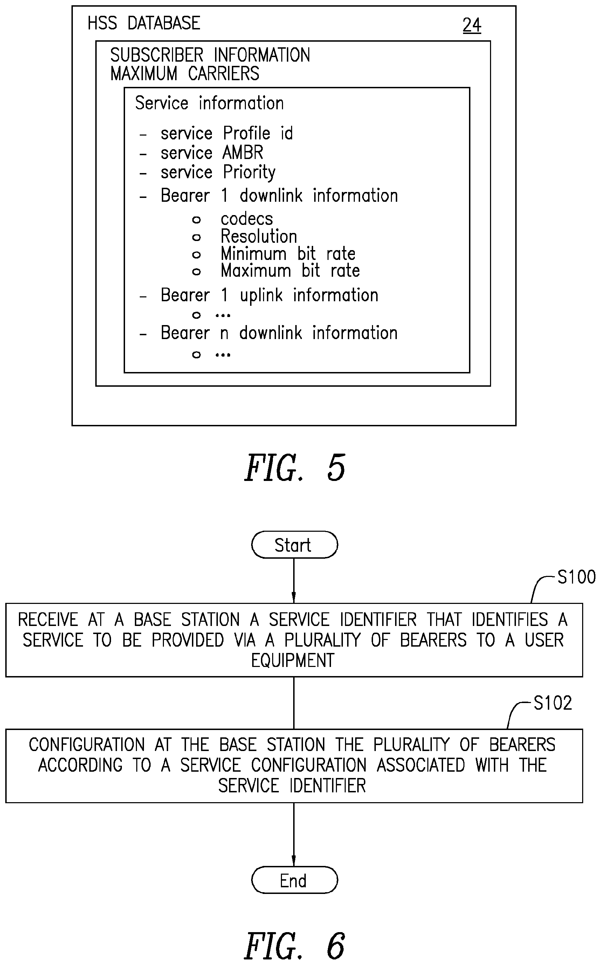

In some embodiments, the service identifiers/QCIs 20 and the service configuration parameters 22 are obtained from the database 24 of the HSS 14 or from the serving gateway 13. The database 24 organizes the different services for each of a plurality of subscribers according to service identifiers and bearers, as shown in FIG. 5, where AMBR is an aggregated maximum bit rate. Thus, the database 24 may specify what services are provided to each subscriber of multiple subscribers, and may specify the parameters for each service for each subscriber. For example, the database 24 may specify the maximum number of carriers allowed per subscriber and a priority, e.g., carrier aggregation priority of each service.

FIG. 6 is a flowchart of an exemplary process for configuring bearers associated with a service. A base station 16 receives a service identifier that identifies a service to be provided via a plurality of bearers to a wireless device 18 (block S100). The service identifier may be carried in a RAB message or separate S1AP message, for example, and may include the information of Tables 1, 2 or 3. The base station 16 configures the plurality of bearers according to a service configuration associated with the service identifier (block S102). Details of the service configuration may be found in Table 4. For example, the base station 16 may adapt a bit rate for one or more voice bearers, or adjust a video resolution and frame rate for a video bearer.

In some embodiments, all of the service configuration parameters are stored at the base station, and the base station receives only a service identifier from a network node to identify the service to be established, modified or deleted. In some embodiments, some but not all of the service configuration parameters associated with a service identifier are received by the base station from a network node. In some embodiments, the service configuration parameters stored in the base station override the service configuration parameters received from a network node. In other embodiments, the service configuration parameters received from the network node override the service configuration parameters stored at the base station. Note further that in some embodiments, a service-wide configuration parameter, i.e., one that applies to all bearers supporting the service, may take precedence over a conflicting bearer-specific configuration parameter. In other embodiments, the opposite case exists, where a bearer-specific configuration parameter may supersede a service-wide configuration parameter.

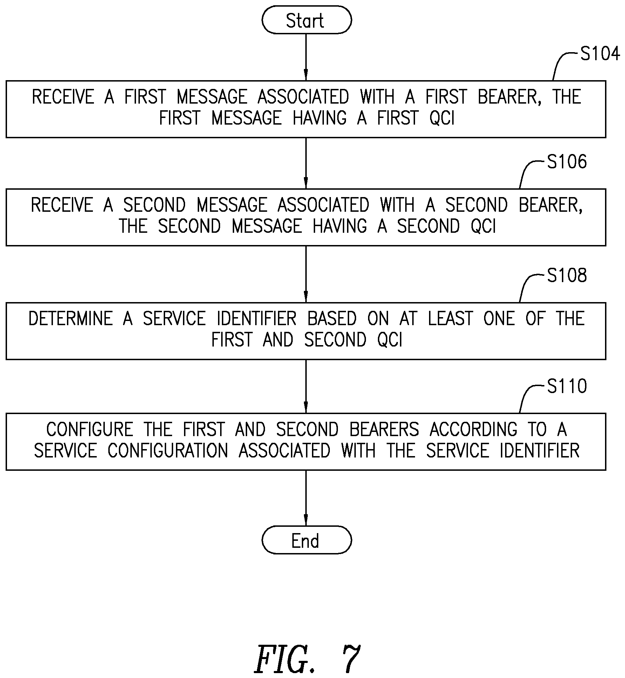

FIG. 7 is a flowchart of another exemplary process for configuring bearers associated with a service. A first message is received at the base station 16 that is associated with a first bearer and has a first QCI (block S104). A second message is received at the base station 16 that is associated with a second bearer and has a second QCI (block S106). A service identifier is determined based on at least one of the first and second QCIs (block S108) as in Table 5. The first and second bearers are configured according to a service configuration associated with the determined service identifier (block S110) as in Tables 6 and 7. Note that the first and second messages are RAB messages in some embodiments. Also, note that the service configuration may include a service-wide configuration that applies to all bearers supporting the service, and/or may include bearer-specific configurations that apply only to particular bearers.

Embodiments described herein enable the base station 16 to perform admission control, congestion and rate adaptation with respect to a service, rather than at a per bearer level. For example, when congestion is detected at the base station 16, rate adaptation algorithms may be chosen to adapt the rates of multiple bearers associated with the service. For example, an IMS video service may use a signaling bearer, a voice bearer and a data bearer. To address congestion, a service level rate adaptation algorithm could consider rate adaptation for all three bearers.

In conventional systems applying admission decisions at the bearer level only, one bearer used to support a service may be admitted, while other bearers needed to support the service may not be admitted. This wastes resources since the service is not useable. By basing admission on service level information, admitting all bearers that support the service is possible. For example, a video service may have 3 bearers (voice, data, control signaling). When admitting a video service, based on the service identifier, the number of bearers associated with the service is known. Hence, resources can be reserved for all three bearers. Similarly, service release can be performed at the service level, rather than at the bearer level. Service level rate adaptation, admission and releasing improve resource utilization and increase end user satisfaction.

The service profile identifier and service characteristics may be employed to define a maximum allowable carriers that can be aggregated in the downlink and a number of a maximum allowable carriers that can be aggregated in the uplink. The maximums may be specified beforehand by an operator of the base station 16. Carrier aggregation decisions may be made at the base station 16 on a per wireless device basis, considering the wireless device category, data in a buffer, channel conditions, etc. A maximum allowable carriers for aggregation is based on information about the services supported by the carriers. If a wireless device has multiple services, a maximum allowed number of carriers for the wireless device is dynamically decided during service creation and deletion procedures to arrive at the number of carriers for the wireless device.

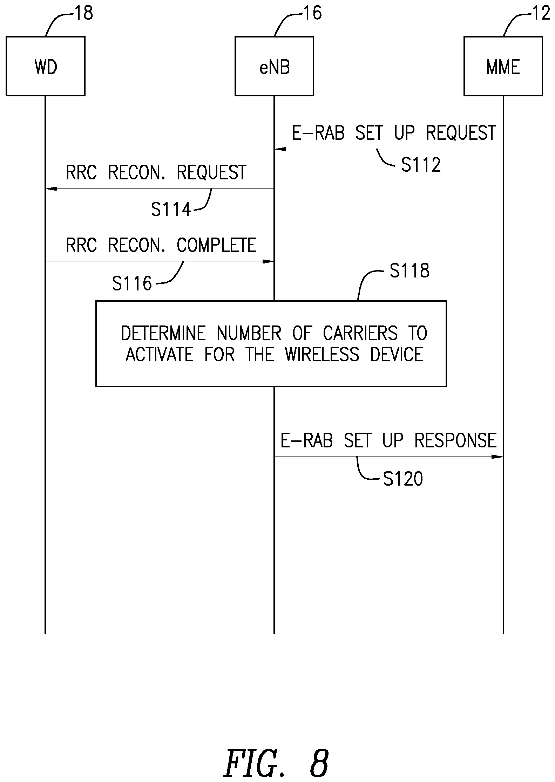

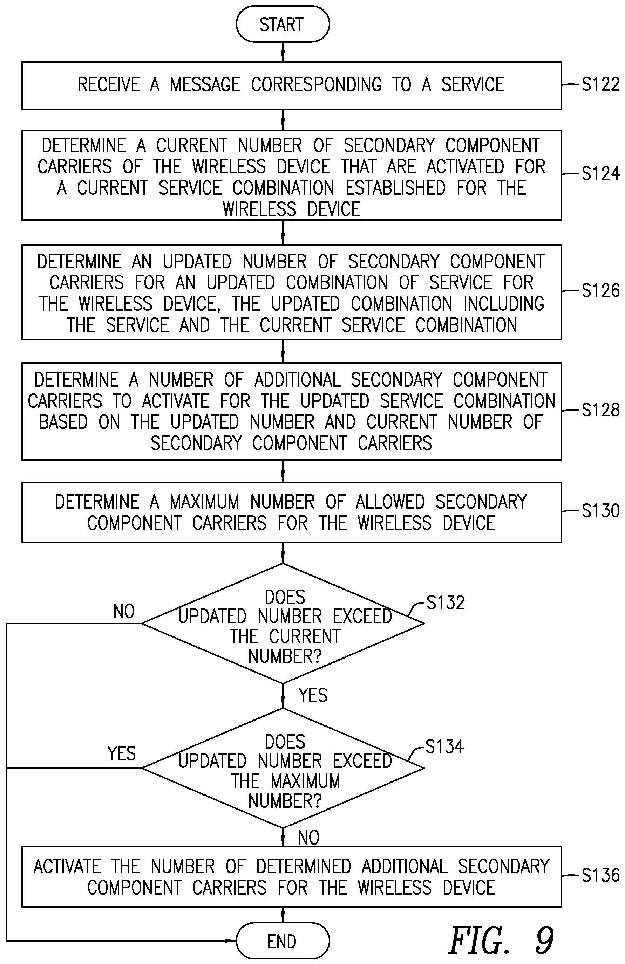

FIG. 8 shows an example process of exchanging messages to facilitate configuring carriers on a per-service basis. As shown in FIG. 8, the MME 12 forwards an E-RAB setup request message (S112). The E-RAB setup request message indicates the particular service to be setup for the wireless device 18 via the base station 16. The base station sends a radio resource control (RRC) connection reconfiguration request (S114) to the wireless device 18 to cause the wireless device 18 to reconfigure to support the requested service. The wireless device 18 sends an RRC connection reconfiguration complete message upon completion of the requested reconfiguration (S116). The base station 16 then determines a number of carriers to activate to support the requested service (S118) as described with reference to FIG. 9. The base station 16 then sends an E-RAB setup response message to the MME 12 indicating setup of the requested service (S120).

Although FIG. 8 uses an E-RAB setup command and sequence, it is understood that the disclosure is not limited solely to setup signaling. Other signaling message types can be used. For example, similar processes occur when the MME 12 sends an E-RAB modify request message or an E-RAB release command, the difference being whether a number of carriers is activated or deactivated. In the case of an E-RAB modify request message, carriers are activated if the modification of services calls for an increase in the number of carriers needed to support the total combination of services for the wireless device 18. Alternatively, if the modification of services call for a decrease in the number of carriers needed to support the total combination of services for the wireless device 18, then carriers are deactivated. Similarly, in the case of an E-RAB release command, carriers are deactivated.

Note also that the service setup and release can be performed by messages that are service specific rather than bearer specific. Thus, the service setup and release messages can be included in E-Service Setup/Modify/Release messages.

FIG. 9 is a flowchart of an exemplary process for configuring secondary component carriers associated with a service for a wireless device 18, the service being associated with a plurality of bearers. The process includes receiving a message corresponding to the service (block S122). A current number of secondary component carriers of the wireless device 18 that are activated for a current service combination established for the wireless device 18 is determined (block S124). The process includes determining an updated number of secondary component carriers for an updated combination of services for the wireless device 18, where the updated combination of services includes the service and the current service combination (block S126). The process also includes determining a number of additional secondary component carriers to activate for the updated service combination based on the updated number and current number of secondary component carriers (block S128). The process also includes determining a maximum number of allowed secondary component carriers for the wireless device 18 (block S130). If the updated number exceeds the current number (block S132) the process proceeds to determine if the updated number exceeds the maximum number (block S134). If the updated number does not exceed the maximum number, then the number of determined additional secondary component carriers is activated for the wireless device 18 (block S136).

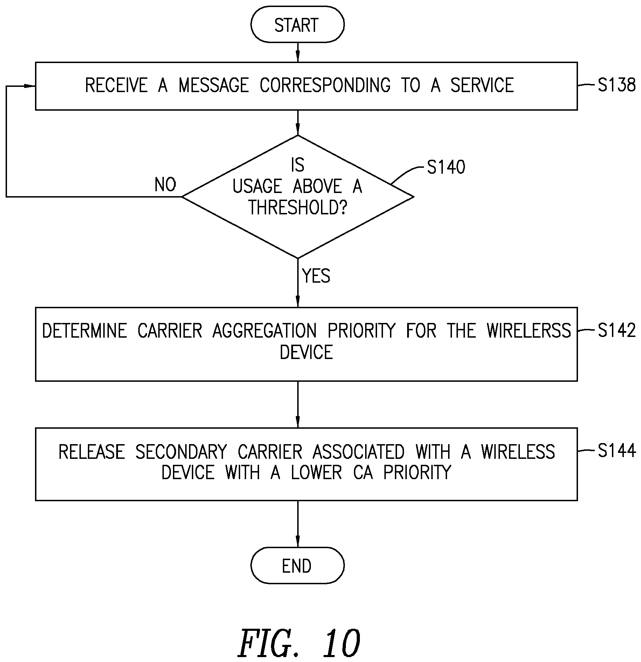

FIG. 10 is a flowchart of an exemplary process for determining when to release a service. A usage of secondary component carriers of a base station 16 are monitored (block S138). If the usage is above the threshold (block S140), then a carrier aggregation priority for the wireless device is determined (block S142). Then, a secondary carrier associated with a wireless device with a lower carrier aggregation priority is released (block S144).

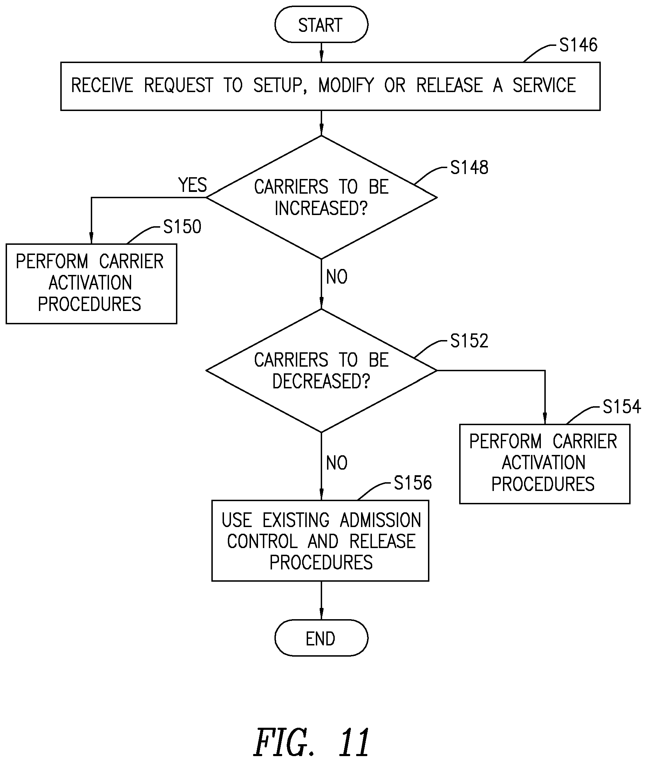

FIG. 11 is a flowchart of an exemplary process for performing carrier activation and deactivation. The base station 16 receives a request to setup, modify or release a service from an MME 12 (block S146). If the number of carriers is to be increased, for example, to add a service, (block S148) then carrier activation procedures are performed at the base station 16 (block S152). If the number of carriers is to be decreased, for example, to release a service (block S150), then carrier deactivation procedures are performed by the base station 16 (block S154). Otherwise, existing admission control and release procedures are performed (block S156).

As will be appreciated by one of skill in the art, the concepts described herein may be embodied as a method, data processing system, and/or computer program product. Accordingly, the concepts described herein may take the form of an entirely hardware embodiment, an entirely software embodiment or an embodiment combining software and hardware aspects all generally referred to herein as a "circuit" or "module." Furthermore, the disclosure may take the form of a computer program product on a tangible computer usable storage medium having computer program code embodied in the medium that can be executed by a computer. Any suitable tangible computer readable medium may be utilized including hard disks, CD-ROMs, electronic storage devices, optical storage devices, or magnetic storage devices.

Some embodiments are described herein with reference to flowchart illustrations and/or block diagrams of methods, systems and computer program products. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks.

These computer program instructions may also be stored in a computer readable memory or storage medium that can direct a computer or other programmable data processing apparatus to function in a particular manner, such that the instructions stored in the computer readable memory produce an article of manufacture including instruction means which implement the function/act specified in the flowchart and/or block diagram block or blocks.

The computer program instructions may also be loaded onto a computer or other programmable data processing apparatus to cause a series of operational steps to be performed on the computer or other programmable apparatus to produce a computer implemented process such that the instructions which execute on the computer or other programmable apparatus provide steps for implementing the functions/acts specified in the flowchart and/or block diagram block or blocks.

It is to be understood that the functions/acts noted in the blocks may occur out of the order noted in the operational illustrations. For example, two blocks shown in succession may in fact be executed substantially concurrently or the blocks may sometimes be executed in the reverse order, depending upon the functionality/acts involved. Although some of the diagrams include arrows on communication paths to show a primary direction of communication, it is to be understood that communication may occur in the opposite direction to the depicted arrows.

Computer program code for carrying out operations of the concepts described herein may be written in an object oriented programming language such as Java® or C++. However, the computer program code for carrying out operations of the disclosure may also be written in conventional procedural programming languages, such as the "C" programming language. The program code may execute entirely on the user's computer, partly on the user's computer, as a stand-alone software package, partly on the user's computer and partly on a remote computer or entirely on the remote computer. In the latter scenario, the remote computer may be connected to the user's computer through a local area network (LAN) or a wide area network (WAN), or the connection may be made to an external computer (for example, through the Internet using an Internet Service Provider).

Many different embodiments have been disclosed herein, in connection with the above description and the drawings. It will be understood that it would be unduly repetitious and obfuscating to literally describe and illustrate every combination and subcombination of these embodiments. Accordingly, all embodiments can be combined in any way and/or combination, and the present specification, including the drawings, shall be construed to constitute a complete written description of all combinations and subcombinations of the embodiments described herein, and of the manner and process of making and using them, and shall support claims to any such combination or subcombination.

It will be appreciated by persons skilled in the art that the embodiments described herein are not limited to what has been particularly shown and described herein above. In addition, unless mention was made above to the contrary, it should be noted that all of the accompanying drawings are not to scale. A variety of modifications and variations are possible in light of the above teachings without departing from the scope of the following claims.

## Claims

1. A method for configuring secondary component carriers associated with a service for a wireless device (18), the service being associated with a plurality of bearers, the method **characterized by**:
receiving a message corresponding to the service (S122); and
when the message is for establishing the service, then:
determining a current number of secondary component carriers of the wireless device (18) that are activated for a current service combination established for the wireless device (S18) (S124);
determining an updated number of secondary component carriers for an updated combination of services for the wireless device (18), the updated combination including the service and the current service combination (S126);
determining a number of additional secondary component carriers to activate for the updated service combination based on the updated number and current number of secondary component carriers (S128); and
determining a maximum number of allowed secondary component carriers for the wireless device (18) (S130); and
when the updated number of secondary component carriers is greater than the current number of secondary component carriers (S132) but does not exceed the maximum number of allowed secondary component carriers of the wireless device (S134), then activating the number of determined additional secondary component carriers (S136).

2. The method of Claim 1, wherein determining an updated number of secondary component carriers comprises calculating the updated number as the current number of secondary component carriers plus a predetermined number of secondary component carriers for the service.

3. The method of Claim 1, wherein determining an updated number of secondary component carriers comprises calculating the updated number as the maximum of the current number of secondary component carriers and a predetermined number of secondary component carriers for the service.

4. The method of Claim 1, wherein the activating comprises, for each of the additional secondary component carriers, activating secondary component carriers for the wireless device (18) after deactivating secondary component carriers for another wireless device;
wherein, as an option, at least one of the number of additional secondary component carriers activated for the wireless device (18) is for a service with a higher carrier aggregation priority than a carrier aggregation priority of a service for the other wireless device for which the at least one of the number of additional secondary component carriers was deactivated.

5. The method of Claim 1, further comprising:
when the message is for releasing the service, then:
determining a second updated number of secondary component carriers for a second updated combination of services for the wireless device (18), the second updated service combination excluding the service to be released; and
deactivating a number of secondary component carriers for the wireless device (18) equal to a difference between the current number and the second updated number when the difference is greater than zero.

6. The method of Claim 1, wherein, when a secondary component carrier usage exceeds a secondary component carrier usage threshold, then:
selecting a second wireless device (18) having a second service having a lower carrier aggregation priority than services of the wireless device (18);
removing the second service from a calculation of a number of carriers for the second wireless device;
recalculating the number of carriers for the second wireless device, and
if the recalculated number of carriers is less than a number of carriers before the removal, then deactivating at least one second component carrier of the second wireless device (18).

7. The method of Claim 1, wherein the received message includes the maximum number of allowed secondary component carriers for the wireless device and a carrier aggregation priority for the service.

8. A base station for configuring secondary component carriers associated with a service for a wireless device, the service being associated with a plurality of bearers, the base station (16) **characterized by**:
processing circuitry (33) including a memory (34) and a processor (36);
the memory (34) configured to store:
a current number of secondary component carriers of the wireless device (18) that are activated for a current service combination established for the wireless device (18);
an updated number of secondary component carriers for an updated combination of services for the wireless device (18), the updated combination including the service and the current service combination;
a number of additional secondary component carriers to activate for the updated service combination based on the updated number and current number of secondary component carriers; and
a maximum number of allowed secondary component carriers for the wireless device (18); and
the processor (36) configured to:
receive a message corresponding to the service; and
when the message is for establishing the service, then:
when the updated number of secondary component carriers is greater than the current number of secondary component carriers but does not exceed the maximum number of allowed secondary component carriers of the wireless device (18), then activate the number of additional secondary component carriers.

9. The base station of Claim 8, wherein the processor is further configured to determine the updated number of secondary component carriers by calculating the updated number as the current number of secondary component carriers plus a predetermined number of secondary component carriers for the service.

10. The base station of Claim 8, wherein the processor is further configured to determine the updated number of secondary component carriers by calculating the updated number as the maximum of the current number of secondary component carriers and a predetermined number of secondary component carriers for the service.

11. The base station of Claim 8, wherein the processor is further configured to activate, for each of the additional secondary component carriers, secondary component carriers for the wireless device (18) after deactivating secondary component carriers for another wireless device.

12. The base station of Claim 11, wherein at least one of the number of additional secondary component carriers activated for the wireless device (18) is for a service with a higher carrier aggregation priority than a carrier aggregation priority of a service for the other wireless device (18) for which the at least one of the number of additional secondary component carriers was deactivated.

13. The base station of Claim 8, wherein the processor is further configured to:
when the message is for releasing the service, then;
determine a second updated number of secondary component carriers for a second updated combination of services for the wireless device (18), the second updated service combination excluding the service to be released; and
deactivate a number of secondary component carriers for the wireless device equal to a difference between the current number and the second updated number when the difference is greater than zero.

14. The base station of Claim 8, wherein the processor is configured to, when a secondary component carrier usage exceeds a secondary component carrier usage threshold, then:
select a second wireless device (18) having a second service having a lower carrier aggregation priority than the services of the wireless device (18);
remove the second service from a calculation of a number of carriers for the second wireless device;
recalculate the number of carriers for the second wireless device; and
if the recalculated number of carriers is less than a number of carriers before removal, then deactivate at least one second component carrier of the second wireless device (18).

15. The base station of Claim 8, wherein the received message includes the maximum number of allowed secondary component carriers for the wireless device and a carrier aggregation priority for the service.

## Patentansprüche

1. Verfahren zum Konfigurieren sekundärer Komponententräger, die mit einem Dienst für eine drahtlose Vorrichtung (18) assoziiert sind, wobei der Dienst mit einer Mehrzahl von Trägern assoziiert ist, und das Verfahren **gekennzeichnet ist durch**:
Empfangen einer Nachricht, die dem Dienst entspricht (S122); und
wenn die Nachricht zum Einrichten des Dienstes ist, dann:
Bestimmen einer aktuellen Anzahl von sekundären Komponententrägern der drahtlosen Vorrichtung (18), die für eine aktuelle Dienstkombination aktiviert sind, die für die drahtlose Vorrichtung eingerichtet ist (S18) (S124);
Bestimmen einer aktualisierten Anzahl von sekundären Komponententrägern für eine aktualisierte Kombination von Diensten für die drahtlose Vorrichtung (18), wobei die aktualisierte Kombination den Dienst und die aktuelle Dienstkombination umfasst (S126);
Bestimmen einer Anzahl von zusätzlichen sekundären Komponententrägern, die für die aktualisierte Dienstkombination aktiviert werden sollen, basierend auf der aktualisierten Anzahl und der aktuellen Anzahl von sekundären Komponententrägern (S128); und
Bestimmen einer maximalen Anzahl von zulässigen sekundären Komponententrägern für die drahtlose Vorrichtung (18) (S130); und
dann, wenn die aktualisierte Anzahl von sekundären Komponententrägern größer als die aktuelle Anzahl von sekundären Komponententrägern ist (S132), aber die maximale Anzahl von zulässigen sekundären Komponententrägern der drahtlosen Vorrichtung nicht überschreitet (S134), Aktivieren der Anzahl von bestimmten zusätzlichen sekundären Komponententrägern (S136).

2. Verfahren nach Anspruch 1, wobei das Bestimmen einer aktualisierten Anzahl von sekundären Komponententrägern ein Berechnen der aktualisierten Anzahl als die aktuelle Anzahl von sekundären Komponententrägern plus einer vorgegebenen Anzahl von sekundären Komponententrägern für den Dienst umfasst.

3. Verfahren nach Anspruch 1, wobei das Bestimmen einer aktualisierten Anzahl von sekundären Komponententrägern ein Berechnen der aktualisierten Anzahl als das Maximum der aktuellen Anzahl von sekundären Komponententrägern und einer vorgegebenen Anzahl von sekundären Komponententrägern für den Dienst umfasst.

4. Verfahren nach Anspruch 1, wobei das Aktivieren für jeden der zusätzlichen sekundären Komponententräger ein Aktivieren von sekundären Komponententrägern für die drahtlose Vorrichtung (18) nach einem Deaktivieren von sekundären Komponententrägern für eine andere drahtlose Vorrichtung umfasst;
wobei als eine Option mindestens einer der Anzahl von zusätzlichen sekundären Komponententrägern, die für die drahtlose Vorrichtung (18) aktiviert werden, für einen Dienst mit einer höheren Trägeraggregationspriorität als einer Trägeraggregationspriorität eines Dienstes für die andere drahtlose Vorrichtung ist, für die der mindestens eine der Anzahl von zusätzlichen sekundären Komponententrägern deaktiviert wurde.

5. Verfahren nach Anspruch 1, ferner umfassend:
wenn die Nachricht zum Freigeben des Dienstes ist, dann:
Bestimmen einer zweiten aktualisierten Anzahl von sekundären Komponententrägern für eine zweite aktualisierte Kombination von Diensten für die drahtlose Vorrichtung (18), wobei die zweite aktualisierte Dienstkombination den freizugebenden Dienst ausschließt: und
Deaktivieren einer Anzahl von sekundären Komponententrägern für die drahtlose Vorrichtung (18) gleich einer Differenz zwischen der aktuellen Anzahl und der zweiten aktualisierten Anzahl, wenn die Differenz größer als null ist.

6. Verfahren nach Anspruch 1, wobei, wenn ein sekundärer Komponententräger eine Nutzungsschwelle für sekundäre Komponententräger überschreitet, dann:
Auswählen einer zweiten drahtlosen Vorrichtung (18) mit einem zweiten Dienst mit einer niedrigeren Trägeraggregationspriorität als Dienste der drahtlosen Vorrichtung (18);
Entfernen des zweiten Dienstes aus einer Berechnung einer Anzahl von Trägern für die zweite drahtlose Vorrichtung;
Neuberechnen der Anzahl von Trägern für die zweite drahtlose Vorrichtung, und
wenn die neuberechnete Anzahl von Trägern kleiner als eine Anzahl von Trägern vor der Entfernung ist, dann Deaktivieren mindestens eines zweiten Komponententrägers der zweiten drahtlosen Vorrichtung (18).

7. Verfahren nach Anspruch 1, wobei die empfangene Nachricht die maximale Anzahl von zulässigen sekundären Komponententrägern für die drahtlose Vorrichtung und eine Trägeraggregationspriorität für den Dienst umfasst.

8. Basisstation zum Konfigurieren sekundärer Komponententräger, die mit einem Dienst für eine drahtlose Vorrichtung assoziiert sind, wobei der Dienst mit einer Mehrzahl von Trägern assoziiert ist, und die Basisstation (16) **gekennzeichnet ist durch**:
Verarbeitungsschaltungsanordnung (33), die einen Speicher (34) und einen Prozessor (36) umfasst;
wobei der Speicher (34) so konfiguriert ist, dass er Folgendes speichert:
eine aktuelle Anzahl von sekundären Komponententrägern der drahtlosen Vorrichtung (18), die für eine aktuelle Dienstkombination aktiviert sind, die für die drahtlose Vorrichtung eingerichtet ist (18);
eine aktualisierte Anzahl von sekundären Komponententrägern für eine aktualisierte Kombination von Diensten für die drahtlose Vorrichtung (18), wobei die aktualisierte Kombination den Dienst und die aktuelle Dienstkombination umfasst;
eine Anzahl von zusätzlichen sekundären Komponententrägern, die für die aktualisierte Dienstkombination aktiviert werden sollen, basierend auf der aktualisierten Anzahl und der aktuellen Anzahl von sekundären Komponententrägern; und
eine maximale Anzahl von zulässigen sekundären Komponententrägern für die drahtlose Vorrichtung (18); und
wobei der Prozessor (36) konfiguriert ist zum:
Empfangen einer Nachricht, die dem Dienst entspricht; und
wenn die Nachricht zum Einrichten des Dienstes ist, dann:
wenn die aktualisierte Anzahl von sekundären Komponententrägern größer als die aktuelle Anzahl von sekundären Komponententrägern ist, aber die maximale Anzahl von zulässigen sekundären Komponententrägern der drahtlosen Vorrichtung (18) nicht überschreitet, Aktivieren der Anzahl von zusätzlichen sekundären Komponententrägern.

9. Basisstation nach Anspruch 8, wobei der Prozessor ferner zum Bestimmen der aktualisierten Anzahl von sekundären Komponententrägern durch Berechnen der aktualisierten Anzahl als die aktuelle Anzahl von sekundären Komponententrägern plus einer vorgegebenen Anzahl von sekundären Komponententrägern für den Dienst konfiguriert ist.

10. Basisstation nach Anspruch 8, wobei der Prozessor ferner zum Bestimmen der aktualisierten Anzahl von sekundären Komponententrägern durch Berechnen der aktualisierten Anzahl als das Maximum der aktuellen Anzahl von sekundären Komponententrägern und einer vorgegebenen Anzahl von sekundären Komponententrägern für den Dienst konfiguriert ist.

11. Basisstation nach Anspruch 8, wobei der Prozessor ferner so konfiguriert ist, dass er für jeden der zusätzlichen sekundären Komponententräger sekundäre Komponententräger für die drahtlose Vorrichtung (18) nach einem Deaktivieren von sekundären Komponententrägern für eine andere drahtlose Vorrichtung aktiviert.

12. Basisstation nach Anspruch 11, wobei mindestens einer der Anzahl von zusätzlichen sekundären Komponententräger, die für die drahtlose Vorrichtung (18) aktiviert werden, für einen Dienst mit einer höheren Trägeraggregationspriorität als einer Trägeraggregationspriorität eines Dienstes für die andere drahtlose Vorrichtung (18) ist, für die der mindestens eine der Anzahl von zusätzlichen sekundären Komponententrägern deaktiviert wurde.

13. Basisstation nach Anspruch 8, wobei der Prozessor ferner konfiguriert ist zum:
wenn die Nachricht zum Freigeben des Dienstes ist, dann:
Bestimmen einer zweiten aktualisierten Anzahl von sekundären Komponententrägern für eine zweite aktualisierte Kombination von Diensten für die drahtlose Vorrichtung (18), wobei die zweite aktualisierte Dienstkombination den freizugebenden Dienst ausschließt: und
Deaktivieren einer Anzahl von sekundären Komponententrägern für die drahtlose Vorrichtung gleich einer Differenz zwischen der aktuellen Anzahl und der zweiten aktualisierten Anzahl, wenn die Differenz größer als null ist.

14. Basisstation nach Anspruch 8, wobei der Prozessor dann, wenn ein sekundärer Komponententräger eine Nutzungsschwelle für sekundäre Komponententräger überschreitet, konfiguriert ist zum:
Auswählen einer zweiten drahtlosen Vorrichtung (18) mit einem zweiten Dienst mit einer niedrigeren Trägeraggregationspriorität als die Dienste der drahtlosen Vorrichtung (18);
Entfernen des zweiten Dienstes aus einer Berechnung einer Anzahl von Trägern für die zweite drahtlose Vorrichtung;
Neuberechnen der Anzahl von Trägern für die zweite drahtlose Vorrichtung; und
Deaktivieren dann, wenn die neuberechnete Anzahl von Trägern kleiner als eine Anzahl von Trägern vor der Entfernung ist, mindestens eines zweiten Komponententrägers der zweiten drahtlosen Vorrichtung (18).

15. Basisstation nach Anspruch 8, wobei die empfangene Nachricht die maximale Anzahl von zulässigen sekundären Komponententrägern für die drahtlose Vorrichtung und eine Trägeraggregationspriorität für den Dienst umfasst.

## Revendications

1. Procédé de configuration de porteuses composantes secondaires associées à un service pour un dispositif sans fil (18), le service étant associé à une pluralité de supports, le procédé étant **caractérisé par** :
la réception d'un message correspondant au service (S122) ; et
lorsque le message est destiné à l'établissement du service, alors :
la détermination d'un nombre actuel de porteuses composantes secondaires du dispositif sans fil (18) qui sont activées pour une combinaison de services actuelle établie pour le dispositif sans fil (18) (S124) ;
la détermination d'un nombre mis à jour de porteuses composantes secondaires pour une combinaison mise à jour de services pour le dispositif sans fil (18), la combinaison mise à jour incluant le service et la combinaison de services actuelle (S126) ;
la détermination d'un nombre de porteuses composantes secondaires supplémentaires à activer pour la combinaison de services mise à jour sur la base du nombre mis à jour et du nombre actuel de porteuses composantes secondaires (S128) ; et
la détermination d'un nombre maximal de porteuses composantes secondaires autorisées pour le dispositif sans fil (18) (S130) ; et
lorsque le nombre mis à jour de porteuses composantes secondaires est supérieur au nombre actuel de porteuses composantes secondaires (S132) mais ne dépasse pas le nombre maximal de porteuses composantes secondaires autorisées du dispositif sans fil (S134), alors l'activation du nombre de porteuses composantes secondaires supplémentaires déterminées (S136).

2. Procédé selon la revendication 1, dans lequel la détermination d'un nombre mis à jour de porteuses composantes secondaires comprend le calcul du nombre mis à jour en tant que le nombre actuel de porteuses composantes secondaires plus un nombre prédéterminé de porteuses composantes secondaires pour le service.

3. Procédé selon la revendication 1, dans lequel la détermination d'un nombre mis à jour de porteuses composantes secondaires comprend le calcul du nombre mis à jour en tant que le maximum du nombre actuel de porteuses composantes secondaires et d'un nombre prédéterminé de porteuses composantes secondaires pour le service.

4. Procédé selon la revendication 1, dans lequel l'activation comprend, pour chacune des porteuses composantes secondaires supplémentaires, l'activation de porteuses composantes secondaires pour le dispositif sans fil (18) après la désactivation de porteuses composantes secondaires pour un autre dispositif sans fil ;
dans lequel, facultativement, au moins l'une du nombre de porteuses composantes secondaires supplémentaires activées pour le dispositif sans fil (18) est destinée à un service avec une priorité d'agrégation de porteuses supérieure à une priorité d'agrégation de porteuses d'un service pour l'autre dispositif sans fil pour lequel l'au moins une du nombre de porteuses composantes secondaires supplémentaires a été désactivée.

5. Procédé selon la revendication 1, comprenant en outre :
lorsque le message est pour la libération du service, alors :
la détermination d'un deuxième nombre mis à jour de porteuses composantes secondaires pour une deuxième combinaison mise à jour de services pour le dispositif sans fil (18), la deuxième combinaison mise à jour de services excluant le service à libérer ; et
la désactivation d'un nombre de porteuses composantes secondaires pour le dispositif sans fil (18) égal à une différence entre le nombre actuel et le deuxième nombre mis à jour lorsque la différence est supérieure à zéro.

6. Procédé selon la revendication 1, dans lequel, lorsqu'une utilisation de porteuses composantes secondaires dépasse un seuil d'utilisation de porteuses composantes secondaires, alors :
la sélection d'un deuxième dispositif sans fil (18) ayant un deuxième service ayant une priorité d'agrégation de porteuses inférieure à celle de services du dispositif sans fil (18) ;
le retrait du deuxième service d'un calcul d'un nombre de porteuses pour le deuxième dispositif sans fil ;
le recalcul du nombre de porteuses pour le deuxième dispositif sans fil ; et
si le nombre recalculé de porteuses est inférieur à un nombre de porteuses avant le retrait, alors la désactivation d'au moins une deuxième porteuse composante du deuxième dispositif sans fil (18).

7. Procédé selon la revendication 1, dans lequel le message reçu inclut le nombre maximal de porteuses composantes secondaires autorisées pour le dispositif sans fil et une priorité d'agrégation de porteuses pour le service.

8. Station de base permettant de configurer des porteuses composantes secondaires associées à un service pour un dispositif sans fil, le service étant associé à une pluralité de supports, la station de base (16) étant **caractérisée par** :
une circuiterie de traitement (33) incluant une mémoire (34) et un processeur (36) ;
la mémoire (34) étant configurée pour mémoriser :
un nombre actuel de porteuses composantes secondaires du dispositif sans fil (18) qui sont activées pour une combinaison de services actuelle établie pour le dispositif sans fil (18) ;
un nombre mis à jour de porteuses composantes secondaires pour une combinaison mise à jour de services pour le dispositif sans fil (18), la combinaison mise à jour incluant le service et la combinaison de services actuelle ;
un nombre de porteuses composantes secondaires supplémentaires à activer pour la combinaison de services mise à jour sur la base du nombre mis à jour et du nombre actuel de porteuses composantes secondaires ; et
un nombre maximal de porteuses composantes secondaires autorisées pour le dispositif sans fil (18) ; et
le processeur (36) configuré pour :
la réception d'un message correspondant au service ; et
lorsque le message est destiné à l'établissement du service, alors :
lorsque le nombre mis à jour de porteuses composantes secondaires est supérieur au nombre actuel de porteuses composantes secondaires mais ne dépasse pas le nombre maximal de porteuses composantes secondaires autorisées du dispositif sans fil (18), alors l'activation du nombre de porteuses composantes secondaires supplémentaires.

9. Station de base selon la revendication 8, dans laquelle le processeur est en outre configuré pour la détermination du nombre mis à jour de porteuses composantes secondaires par le calcul du nombre mis à jour en tant que le nombre actuel de porteuses composantes secondaires plus un nombre prédéterminé de porteuses composantes secondaires pour le service.

10. Station de base selon la revendication 8, dans laquelle le processeur est en outre configuré pour la détermination du nombre mis à jour de porteuses composantes secondaires par le calcul du nombre mis à jour en tant que le maximum du nombre actuel de porteuses composantes secondaires et d'un nombre prédéterminé de porteuses composantes secondaires pour le service.

11. Station de base selon la revendication 8, dans laquelle le processeur est en outre configuré pour l'activation, pour chacune des porteuses composantes secondaires supplémentaires, de porteuses composantes secondaires pour le dispositif sans fil (18) après la désactivation de porteuses composantes secondaires pour un autre dispositif sans fil.

12. Station de base selon la revendication 11, dans laquelle au moins l'une du nombre de porteuses composantes secondaires supplémentaires activées pour le dispositif sans fil (18) est destinée à un service avec une priorité d'agrégation de porteuses supérieure à une priorité d'agrégation de porteuses d'un service pour l'autre dispositif sans fil (18) pour lequel l'au moins une du nombre de porteuses composantes secondaires supplémentaires a été désactivée.

13. Station de base selon la revendication 8, dans laquelle le processeur est en outre configuré pour :
lorsque le message est pour la libération du service, alors :
la détermination d'un deuxième nombre mis à jour de porteuses composantes secondaires pour une deuxième combinaison mise à jour de services pour le dispositif sans fil (18), la deuxième combinaison mise à jour de services excluant le service à libérer ; et
la désactivation d'un nombre de porteuses composantes secondaires pour le dispositif sans fil égal à une différence entre le nombre actuel et le deuxième nombre mis à jour lorsque la différence est supérieure à zéro.

14. Station de base selon la revendication 8, dans laquelle le processeur est en outre configuré pour, lorsqu'une utilisation de porteuses composantes secondaires dépasse un seuil d'utilisation de porteuses composantes secondaires, alors :
la sélection d'un deuxième dispositif sans fil (18) ayant un deuxième service ayant une priorité d'agrégation de porteuses inférieure à celle des services du dispositif sans fil (18) ;
le retrait du deuxième service d'un calcul d'un nombre de porteuses pour le deuxième dispositif sans fil ;
le recalcul du nombre de porteuses pour le deuxième dispositif sans fil ; et
si le nombre recalculé de porteuses est inférieur à un nombre de porteuses avant le retrait, alors la désactivation d'au moins une deuxième porteuse composante du deuxième dispositif sans fil (18).

15. Station de base selon la revendication 8, dans laquelle le message reçu inclut le nombre maximal de porteuses composantes secondaires autorisées pour le dispositif sans fil et une priorité d'agrégation de porteuses pour le service.
